# EUROPÄISCHE PATENTANMELDUNG

(11) **EP 3 516 953 A1**
(43) Veröffentlichungstag der Anmeldung: **31.07.2019**
(21) Anmeldenummer: 19152777.9
(22) Anmeldetag: 21.01.2019
(51) Int. Cl.: A01G 27/00, A01G 31/06

(54) **VORRICHTUNG ZUR AUFZUCHT VON PFLANZEN UND BEWÄSSERUNGSVORRICHTUNG DER VORRICHTUNG ZUR AUFZUCHT VON PFLANZEN**

(30) Priorität: 25.01.2018 DE 102018101697
(71) Anmelder: agrilution GmbH, 81249 München (DE)
(72) Erfinder: LÖSSL, Maximilian, 80469 München (DE); WAGNER, Philipp, 82256 Fürstenfeldbruck (DE)
(74) Vertreter: Viering, Jentschura & Partner mbB Patent- und Rechtsanwälte

(57) **Zusammenfassung**

In verschiedenen Ausführungsbeispielen wird eine Vorrichtung zur Aufzucht von Pflanzen (100) bereitgestellt, die eine Bewässerungsvorrichtung (20), einen Aufnahmeraum (12) zum Aufnehmen einer oder mehrerer Saatmatten, und eine Steuerungseinheit (60), die eingerichtet ist, mittels einer Programmsteuerung die Bewässerungsvorrichtung (20) zu steuern, aufweist. Dabei weist die Bewässerungsvorrichtung (20) in verschiedenen Ausführungsbeispielen ein Wasserkreislaufsystem (410) zum Zuführen von Wasser zu den Saatmatten auf, wobei das Wasserkreislaufsystem (410) mindestens einen Zulauf (422), einen Wassertank, mindestens eine Wasserkreislaufpumpe (414) und mindestens einen Ablauf (424) aufweist. Ferner weist die Bewässerungsvorrichtung (20) einen Sensor (416) auf, der eingerichtet ist, einen Leitwert des zugeführten Wassers zu ermitteln.

## Beschreibung

Verschiedene Ausführungsbeispiele betreffen allgemein eine Vorrichtung zur Aufzucht von Pflanzen und betreffen insbesondere eine Bewässerungsvorrichtung der Vorrichtung zur Aufzucht von Pflanzen und ein Verfahren zur Aufzucht von Pflanzen.

Im Bereich der Versorgung mit frischen Produkten, wie beispielsweise Kräutern, Salat, Obst und Gemüse, sind die Ansprüche der Verbraucher in den letzten Jahren zunehmend gestiegen. Insbesondere seit dem Anprangern von Missständen in der Haltung von Schlachttieren und der zunehmenden Verbreitung vegetarischer oder veganer Ernährung ist das Bewusstsein vieler Verbraucher für und ihr Bedarf an frischen Produkten gestiegen.

Bisher werden diese Produkte zum allergrößten Teil entweder auf Feldern oder in Gewächshäusern von Großbetrieben erzeugt und mittels des Verkaufs in Supermärkten zu den Verbrauchern gebracht. In kleinerem Umfang versorgen sich die Verbraucher auch direkt beim Erzeuger auf Wochenmärkten und im Direktverkauf auf Bauernhöfen, wobei diese Vertriebswege aufgrund der zeitlich eingeschränkten Verfügbarkeit oder der notwendigen räumlichen Nähe zum Erzeuger nur einem relativ kleinen Teil der Bevölkerung zur Verfügung stehen.

Mit dem für die eigene Gesundheit sensibilisierten Bewusstsein großer Teile insbesondere der in Städten lebenden Bevölkerung erwächst gerade hier zunehmend ein Bedürfnis nach Erzeugnissen aus kontrolliertem Anbau und sogar der Wunsch nach persönlicher Kontrolle und sinnstiftender Beschäftigung mit dem Anbau eigener, entsprechend frischer Produkte.

Allerdings hat nur ein sehr geringer Teil der städtischen Bevölkerung Zugang zu einem Garten oder entsprechenden Anlagen, in dem beispielsweise eigene kleine Gewächshäuser aufgestellt werden könnten, um frische Produkte anzubauen. Auch bietet die städtische Umgebung selten die Möglichkeit, ohne größeren organisatorischen Aufwand mit Pflanzkästen und -töpfen zu hantieren, geschweige denn, die darin angesetzten Pflanzen einerseits mit dem notwendigen Schutz gegenüber Wettereinflüssen zu versehen und andererseits ausreichend mit Sonnenlicht zu versorgen, um das erwünschte Wachstum der Pflanzen zu fördern.

Außerdem hat gerade die städtische Bevölkerung häufig einen Tagesablauf, der geprägt ist durch das Arbeiten außer Haus sowie häufig lange Wege zu und von der Arbeitsstätte, so dass keine Muße besteht, sich neben allem anderen auch noch um das Gedeihen von Pflanzen zu kümmern, dieses zu beobachten und die Pflege dieser Pflanzen an die jeweilige Wachstumsphase anzupassen.

Aufgrund all dieser Schwierigkeiten schrecken viele Menschen, die eigentlich gerne vom Anbau eigener Pflanzen und der Ernte eigener Produkte profitieren würden, vor dem Aufwand zurück, den das Anbauen dieser Pflanzen mit sich bringt. Dieses Zurückschrecken wird noch verstärkt durch das Gefühl, dass die Wahrscheinlichkeit sehr gering ist, dass am Ende der Aufwand tatsächlich durch frische Zutaten aus dem eigenen Anbau belohnt wird, da im hektischen städtischen Alltag nicht gewährleistet werden kann, dass die Pflege der Pflanzen so optimal ist, dass sie zu guten Ergebnissen führt.

Im Sinne des aufgeklärten Verbrauchers, der sich bewusst gesund ernähren will und dabei auf Nachhaltigkeit bedacht ist, aber weder die räumlichen noch die zeitlichen Möglichkeiten zum Anbau von Pflanzen in herkömmlicher Weise hat, ist es also wünschenswert, eine Möglichkeit zu schaffen, mithilfe derer sich auch Kleinverbraucher, wie beispielsweise der typische moderne Single-Städter, im gewünschten Umfang selbständig mit frischen Nahrungszutaten versorgen können.

Im Sinne dieser Anforderungen wurde kürzlich eine Vorrichtung vorgestellt, mit Hilfe derer auch Einzelverbraucher in einem kleinen, an übliche Küchengrößen angepassten Maßstab Kräuter, Salate, Gemüse oder Obst frisch ziehen können (siehe DE 10 2015 118 059 A1).

Besonders problematisch bei der Aufzucht von derartigen Pflanzen ist, dass diese ständig mit Wasser und Nährstoffen versorgt werden müssen, wobei der Bedarf an Beidem von Pflanzenart zu Pflanzenart sowie im Verlauf des Keimens und Wachsens der Pflanzen variiert. Dabei müssen die Qualität und Zusammensetzung des Gießwassers ständig kontrolliert und geregelt werden. Hierbei ist eine weitgehende Automatisierung der Versorgung der Pflanzen in der Vorrichtung zur Aufzucht wünschenswert. Außerdem ist unter den für das Pflanzenwachstum in der Vorrichtung zur Aufzucht von Pflanzen notwendigen Bedingungen, beispielsweise bezüglich Beleuchtung und Wärme, das gleichzeitige Wachstum von Bakterien, Pilzen und Algen in den Versorgungsleitungen zu befürchten, das sich negativ auf das Pflanzenwachstum auswirken kann.

In verschiedenen Ausführungsbeispielen wird eine Vorrichtung zur Aufzucht von Pflanzen bereitgestellt, die eine Bewässerungsvorrichtung, einen Aufnahmeraum zum Aufnehmen einer oder mehrerer Saatmatten, und eine Steuerungseinheit, die eingerichtet ist, mittels einer Programmsteuerung die Bewässerungsvorrichtung zu steuern, aufweist. Dabei weist die Bewässerungsvorrichtung in verschiedenen Ausführungsbeispielen ein Wasserkreislaufsystem zum Zuführen von Wasser zu den Saatmatten auf, wobei das Wasserkreislaufsystem mindestens einen Zulauf, einen Wassertank, mindestens eine Wasserkreislaufpumpe und mindestens einen Ablauf aufweist. Ferner weist die Bewässerungsvorrichtung einen Sensor auf, der eingerichtet ist, einen Leitwert des zugeführten Wassers zu ermitteln.

In verschiedenen Ausführungsbeispielen ist die Bewässerungsvorrichtung dazu eingerichtet, den Pflanzen mit dem Wasser notwendige Nährstoffe zuzuführen.

Die Steuerungseinheit kann dazu eingerichtet sein, mittels der Programmsteuerung die Zusammensetzung des Wassers zu steuern bzw. zu regeln, anders ausgedrückt, zu verändern.

Die Steuerungseinheit kann dazu eingerichtet sein, Messwerte von dem Sensor zugeleitet zu bekommen. Anders ausgedrückt kann die Steuerungseinheit dazu eingerichtet sein, Messwerte von dem Sensor zu empfangen. Der Sensor kann dazu eingerichtet sein, der Steuerungseinheit Messwerte zuzuleiten, anders ausgedrückt, zu übermitteln.

In verschiedenen Ausführungsbeispielen ist die Steuerungseinheit eingerichtet, die Bewässerungsvorrichtung derart zu steuern bzw. zu regeln, anders ausgedrückt, zu verändern, dass das Wasser eine festgelegte Zusammensetzung aufweist.

In verschiedenen Ausführungsbeispielen ist die Bewässerungsvorrichtung ferner dazu eingerichtet, das Wasser zu reinigen.

Die Bewässerungsvorrichtung kann dazu eingerichtet sein, den Pflanzen Wasser in gleichbleibender Qualität zuzuführen.

In verschiedenen Ausführungsbeispielen ist der Sensor ferner dazu eingerichtet, einen Wasserstand in dem Tank der Bewässerungsvorrichtung zu ermitteln.

Der Sensor kann dazu eingerichtet sein, den Leitwert und den Wasserstand des Wassers kontaktlos zu ermitteln.

In verschiedenen Ausführungsbeispielen ist der Sensor ein kapazitiver Sensor.

Die Steuerungseinheit kann dazu eingerichtet sein, ein Warnsignal zu erzeugen und auszugeben, wenn der Wasserstand in dem Wassertank unter einen bestimmten Wert absinkt.

In verschiedenen Ausführungsbeispielen weist die Bewässerungsvorrichtung eine oder mehrere Bewässerungswannen, die jeweils unter den Saatmatten angeordnet sind, auf und ist dazu eingerichtet, der einen oder mehreren Bewässerungswannen Wasser aus dem Wassertank zuzuführen.

Die Bewässerungsvorrichtung kann dazu eingerichtet sein, den Bewässerungswannen in regelmäßigen Intervallen Wasser zuzuführen.

In verschiedenen Ausführungsbeispielen weisen die Saatmatten Saatgut auf, wobei aus dem Saatgut vorzugsweise Pflanzen wachsen.

In verschiedenen Ausführungsbeispielen weist die Vorrichtung ferner eine Kamera zum Aufnehmen von Bildern der in dem Aufnahmeraum aufgenommenen Saatmatten und der aus dem Saatgut entstehenden Pflanzen auf.

In verschiedenen Ausführungsbeispielen weist die Steuerungseinheit eine Mustererkennungsvorrichtung und einen zugehörigen Mustererkennungsspeicher auf und ist dazu eingerichtet, Signale von der Kamera zur Programmsteuerung weiterzuleiten.

Die Steuerungseinheit kann dazu eingerichtet sein, mittels der Mustererkennungsvorrichtung die mittels der Kamera aufgenommenen Bilder mit einem oder mehreren in dem Mustererkennungsspeicher gespeicherten Referenzbildern zu vergleichen zum Ermitteln eines Zustands der in dem Aufnahmeraum aufgenommenen Pflanzen, um somit die Programmsteuerung auf die jeweilige Pflanze und ihren Zustand anzupassen.

Die Steuerungseinheit kann ferner dazu eingerichtet sein, die Intervalle zum Zuführen von Wasser zu den Bewässerungswannen auf das jeweilige Saatgut, das in den Aufnahmeraum eingebracht wurde, und/oder den Zustand der aus dem Saatgut entstehenden Pflanzen abzustimmen.

In verschiedenen Ausführungsbeispielen weisen die Bewässerungswannen eine Überlaufeinkerbung, die dazu eingerichtet ist, überschüssiges Wasser aus den Bewässerungswannen ablaufen zu lassen, und einen Ablauf, der dazu eingerichtet ist, das Wasser vollständig aus den Bewässerungswannen ablaufen zu lassen, auf.

In verschiedenen Ausführungsbeispielen weist die Bewässerungsvorrichtung ferner auf: mindestens einen Vorratsbehälter zum Bevorraten von mineralischem Dünger und/oder organischem Dünger und/oder Säure und/oder Base; und mindestens eine Pumpe zum Zuführen des mineralischen Düngers und/oder des organischen Düngers und/oder der Säure und/oder der Base in das Wasserkreislaufsystem. Dabei ist die Pumpe optional eine peristaltische Pumpe.

Die Steuerungseinheit kann dazu eingerichtet sein, einen Nährstoffgehalt des Wassers auf der Basis des Leitwertes des Wassers zu regeln.

In verschiedenen Ausführungsbeispielen ist die Steuerungseinheit dazu eingerichtet, die Pumpen auf Basis der für den Leitwert des Wassers ermittelten Werte derart anzusteuern, dass diese mineralischen Dünger und/oder organischen Dünger und/oder Säure und/oder Base in das Wasserkreislaufsystem abgeben.

Die Steuerungseinheit kann dazu eingerichtet sein, eine Regelgröße für den Nährstoffgehalt auf der Basis der in den Aufnahmeraum eingebrachten Pflanzen und/oder ihres Zustands festzulegen.

In verschiedenen Ausführungsbeispielen weist die Bewässerungsvorrichtung ferner ein Vier-Wege-Ventil und einen oder mehrere Einzelkreisläufe auf, wobei das Vier-Wege-Ventil dazu eingerichtet ist, das Wasser dem einen oder mehreren Einzelkreisläufen zuzuführen.

In verschiedenen Ausführungsbeispielen weist das Wasserkreislaufsystem einen Einzelkreislauf für jede Bewässerungswanne und einen Einzelkreislauf zum Reinigen des Wassers auf.

In verschiedenen Ausführungsbeispielen weist die Bewässerungsvorrichtung ferner einen Temperatursensor auf.

In verschiedenen Ausführungsbeispielen sind der Sensor und der Temperatursensor in einem Gehäuse angeordnet.

In verschiedenen Ausführungsbeispielen weist der Temperatursensor einen NTC-Thermistor auf.

In verschiedenen Ausführungsbeispielen weist die Bewässerungsvorrichtung ferner mindestens einen Filter, der eingerichtet ist, Pflanzenreste und/oder Nährstoffablagerungen in dem Wasserkreislaufsystem aufzufangen, auf.

In verschiedenen Ausführungsbeispielen weist die Bewässerungsvorrichtung ferner eine Vorrichtung zum Reinigen des Wassers auf.

In verschiedenen Ausführungsbeispielen ist die Vorrichtung zum Reinigen des Wassers eingerichtet, das Wasser mittels Bestrahlens mit Licht im UV-C-Bereich zu reinigen.

In verschiedenen Ausführungsbeispielen weist die Vorrichtung ferner einen Tür-Sensor zum Ermitteln, ob eine Tür der Vorrichtung geöffnet oder geschlossen ist, auf, wobei der Tür-Sensor optional ein IR-Sensor ist.

Die Steuerungseinheit kann dazu eingerichtet sein, Signale von dem Tür-Sensor zu empfangen.

Die Steuerungseinheit kann dazu eingerichtet sein, bei geöffneter Tür die Bewässerungsvorrichtung derart anzusteuern, dass kein Wasser in dem Wasserkreislaufsystem umgepumpt wird, und kann dazu eingerichtet sein, bei geschlossener Tür die Bewässerungsvorrichtung derart anzusteuern, dass Wasser in dem Wasserkreislaufsystem umgepumpt wird.

In verschiedenen Ausführungsbeispielen wird ein Verfahren zur Aufzucht von Pflanzen bereitgestellt, das Verfahren aufweisend: Einbringen einer oder mehrere Saatmatten in einen Aufnahmeraum einer Vorrichtung zur Aufzucht von Pflanzen; Steuern einer Bewässerungsvorrichtung mittels einer Programmsteuerung einer Steuerungseinheit, wobei die Bewässerungseinheit ein Wasserkreislaufsystem aufweist; Zuführen von Wasser zu den Saatmatten mittels des Wasserkreislaufsystems, das mindestens einen Zulauf, einen Wassertank, mindestens eine Wasserkreislaufpumpe und mindestens einen Ablauf aufweist, und Ermitteln eines Leitwerts des zugeführten Wassers mittels eines Sensors.

Das Verfahren kann ferner ein Ermitteln eines Wasserstands in dem Wassertank der Bewässerungsvorrichtung aufweisen.

In verschiedenen Ausführungsbeispielen werden der Leitwert des Wassers und der Wasserstand in dem Wassertank mittels desselben Sensors ermittelt.

In verschiedenen Ausführungsbeispielen werden der Leitwert des Wassers und der Wasserstand in dem Wassertank kontaktlos ermittelt.

Der Leitwert des Wassers und der Wasserstand in dem Wassertank können beispielsweise kapazitiv ermittelt werden. In verschiedenen Ausführungsbeispielen weist das Verfahren ferner Zuführen von Messwerten des Sensors zu der Steuerungseinheit auf.

In verschiedenen Ausführungsbeispielen weist das Verfahren ferner ein Erzeugen und Ausgeben eines Warnsignals auf, wenn der Wasserstand in dem Wassertank unter einen bestimmten Wert absinkt.

In verschiedenen Ausführungsbeispielen weist das Verfahren ferner ein Zuführen von Wasser mittels der Bewässerungsvorrichtung aus dem Wassertank zu einer oder mehreren Bewässerungswannen der Bewässerungsvorrichtung auf, wobei die Bewässerungswannen jeweils unter den Saatmatten angeordnet sind.

Die Bewässerungsvorrichtung kann den Bewässerungswannen in regelmäßigen Intervallen Wasser zuführen.

In verschiedenen Ausführungsbeispielen weist das Verfahren ferner ein Aufbringen von Saatgut auf den Saatmatten auf, wobei vorzugsweise Pflanzen aus dem Saatgut wachsen.

In verschiedenen Ausführungsbeispielen weist das Verfahren ferner ein Aufnehmen von Bildern der in dem Aufnahmeraum aufgenommenen Saatmatten und der aus dem Saatgut entstehenden Pflanzen mittels einer Kamera auf.

In verschiedenen Ausführungsbeispielen weist das Verfahren ferner auf: Weiterleiten von Signalen von der Kamera zur Programmsteuerung; Vergleichen der mittels der Kamera aufgenommenen Bilder mit einem oder mehreren in einem Mustererkennungsspeicher der Steuerungseinheit gespeicherten Referenzbildern zum Ermitteln eines Zustands der in dem Aufnahmeraum aufgenommenen Pflanzen mittels einer Mustererkennungsvorrichtung der Steuerungseinheit; und Anpassen der Programmsteuerung an die jeweilige Pflanze und ihren Zustand.

Die Steuerungseinrichtung kann die Intervalle auf das jeweilige Saatgut und/oder den Zustand der Pflanzen, die in den Aufnahmeraum eingebracht wurden, abstimmen.

Die Bewässerungswannen können in jedem Intervall einmal komplett mit Wasser befüllt werden.

In verschiedenen Ausführungsbeispielen läuft das Wasser nach dem Füllen mittels eines an jeder der Bewässerungswannen befindlichen Ablaufs wieder vollständig aus der Bewässerungswanne heraus und fließt in den Wassertank zurück.

In verschiedenen Ausführungsbeispielen weist das Verfahren ferner ein Zuführen von mineralischem Dünger und/oder organischem Dünger und/oder Säure und/oder Base zu dem Wasser in dem Wasserkreislaufsystem mittels mindestens einer Pumpe auf, wobei die Pumpe optional eine peristaltische Pumpe ist.

Die Steuerungseinheit kann die Pumpen derart ansteuern, dass diese dem Wasserkreislaufsystem auf Basis der für den Leitwert des Wassers ermittelten Werte mineralischen Dünger und/oder organischen Dünger und/oder Säure und/oder Base zuführen.

Die Steuerungseinheit kann einen Nährstoffgehalt des Wassers auf der Basis des Leitwertes des Wassers festlegen.

Die Steuerungseinheit kann eine Regelgröße für den Nährstoffgehalt auf der Basis der in dem Aufnahmeraum eingebrachten Pflanzen und/oder ihres Zustands festlegen.

In verschiedenen Ausführungsbeispielen führt die Bewässerungsvorrichtung mittels eines Vierwegeventils das Wasser einem oder mehreren Einzelkreisläufen des Wasserkreislaufsystems zu.

In verschiedenen Ausführungsbeispielen steuert die Steuerungseinheit die Bewässerungsvorrichtung derart, dass das Wasser einem Einzelkreislauf für jede Bewässerungswanne und/oder einem Einzelkreislauf zum Reinigen des Wassers zugeführt wird.

In verschiedenen Ausführungsbeispielen weist das Verfahren ferner Ermitteln einer Wassertemperatur mittels eines Temperatursensors auf, wobei der Temperatursensor optional ein NTC-Thermistor ist.

In verschiedenen Ausführungsbeispielen weist das Verfahren ferner Filtern des Wassers in dem Wasserkreislaufsystem auf, derart, dass Pflanzenreste und/oder Nährstoffablagerungen in dem Wasserkreislaufsystem aufgefangen werden.

In verschiedenen Ausführungsbeispielen weist das Verfahren ferner Reinigen des Wassers mittels einer Vorrichtung in der Bewässerungsvorrichtung auf.

Die Vorrichtung zum Reinigen des Wassers kann das Wasser mittels Bestrahlens mit Licht im UV-C-Bereich reinigen.

In verschiedenen Ausführungsbeispielen weist das Verfahren ferner ein Ermitteln, ob eine Tür der Vorrichtung geöffnet oder geschlossen ist, mittels eines Tür-Sensors auf, wobei der Tür-Sensor optional ein IR-Sensor ist.

Die Steuerungseinheit kann Signale von dem Tür-Sensor empfangen.

Die Steuerungseinheit kann bei geöffneter Tür die Bewässerungsvorrichtung derart ansteuern, dass kein Wasser in dem Wasserkreislaufsystem umgepumpt wird, und kann bei geschlossener Tür die Bewässerungsvorrichtung derart ansteuern, dass Wasser in dem Wasserkreislaufsystem umgepumpt wird.

In verschiedenen Ausführungsbeispielen wird eine Vorrichtung zur Aufzucht von Pflanzen bereitgestellt, die Vorrichtung aufweisend: eine Bewässerungsvorrichtung zum Aufnehmen und Verteilen von Wasser; einen Aufnahmeraum zum Aufnehmen einer oder mehrerer Saatmatten; und eine Steuerungseinheit, wobei die Bewässerungsvorrichtung eine Vorrichtung zum Reinigen des Wassers aufweist.

Die Vorrichtung zum Reinigen des Wassers kann dazu eingerichtet sein, das Wasser mittels Bestrahlens mit Licht im UV-C-Bereich zu reinigen.

Die Vorrichtung zum Reinigen des Wassers kann dazu eingerichtet sein, Licht in einem Wellenlängenbereich von ungefähr 200 nm bis ungefähr 280 nm abzustrahlen.

In verschiedenen Ausführungsbeispielen ist die Vorrichtung zum Reinigen des Wassers eingerichtet, mittels Bestrahlens mit Licht im UV-C-Bereich Protisten, Bakterien, Pilze und/oder Algen abzutöten.

In verschiedenen Ausführungsbeispielen weist das Wasserkreislaufsystem einen oder mehrere Einzelkreisläufe auf, wobei die Vorrichtung zum Reinigen des Wassers in einem eigenen Einzelkreislauf des Wasserkreislaufsystems angeordnet ist.

Die Steuerungseinheit kann dazu eingerichtet sein, eine Bestrahlungsdauer des Wassers mit Licht im UV-C-Bereich zu regeln, und ist eingerichtet, eine Bestrahlungsintensität des Wassers mit Licht im UV-C-Bereich zu regeln.

In verschiedenen Ausführungsbeispielen wird ein Verfahren zur Aufzucht von Pflanzen bereitgestellt, aufweisend: Einbringen einer oder mehrere Saatmatten in einen Aufnahmeraum einer Vorrichtung zur Aufzucht von Pflanzen; Steuern einer Bewässerungsvorrichtung mittels einer Programmsteuerung einer Steuerungseinheit, wobei die Bewässerungseinheit ein Wasserkreislaufsystem und Wasser aufweist; und Reinigen des Wassers in der Bewässerungsvorrichtung.

Das Wasser in der Bewässerungsvorrichtung kann beispielsweise mittels Bestrahlens des Wassers mit Licht im UV-C-Bereich gereinigt werden.

In verschiedenen Ausführungsbeispielen wird das Wasser in der Bewässerungsvorrichtung mittels Bestrahlens des Wassers mit Licht in einem Wellenlängenbereich von ungefähr 200 nm bis ungefähr 280 nm gereinigt.

Mittels des Bestrahlens des Wassers mit Licht im UV-C-Bereich können Protisten, Bakterien, Pilze und/oder Algen abgetötet werden.

In verschiedenen Ausführungsbeispielen wird das Wasser zum Reinigen mittels der Steuerungseinheit in einen eigenen Einzelkreislauf des Wasserkreislaufsystems geleitet.

In verschiedenen Ausführungsbeispielen regelt die Steuerungseinheit eine Bestrahlungsdauer zum Reinigen des Wassers und regelt eine Bestrahlungsintensität zum Reinigen des Wassers.

In verschiedenen Ausführungsbeispielen ist die Steuerungseinheit ferner eingerichtet, mittels der Programmsteuerung eine Klimatisierungsvorrichtung zu steuern, wobei die Programmsteuerung individuell auf eine oder mehrere von in dem Aufnahmeraum aufgenommenen Saatmatten abgestimmte Klimatisierungsdaten aufweist.

In verschiedenen Ausführungsbeispielen ist für die Programmsteuerung ein Datenspeicher vorgesehen, aus welchem die individuell auf das Saatgut abgestimmten Beleuchtungs- und/oder Bewässerungs- und/oder Klimatisierungsdaten abrufbar sind, wobei vorzugsweise der Datenspeicher über eine in der Vorrichtung vorgesehene Internetverbindung als externer Datenspeicher vorgesehen ist.

Ausführungsbeispiele der Erfindung sind in den Figuren dargestellt und werden im Folgenden näher erläutert.

Es zeigen
- Figur 1: eine Vorrichtung zur Aufzucht von Pflanzen gemäß verschiedenen Ausführungsbeispielen;
- Figur 2A: eine Aufzuchteinheit zum Einbringen in die Vorrichtung zur Aufzucht von Pflanzen gemäß verschiedenen Ausführungsbeispielen;
- Figur 2B: eine Bewässerungswanne einer Aufzuchteinheit gemäß verschiedenen Ausführungsbeispielen;
- Figur 2C: einen Mattenträger zum Einsetzen auf eine Bewässerungswanne gemäß verschiedenen Ausführungsbeispielen;
- Figur 2D: eine Saatmatte zum Auflegen auf einen Mattenträger gemäß verschiedenen Ausführungsbeispielen;
- Figur 3: eine schematische Darstellung eines Wasserkreislaufsystems zum Zuführen von Wasser und Nährstoffen zu den Pflanzen gemäß verschiedenen Ausführungsbeispielen;
- Figur 4: eine Darstellung des Wasserkreislaufsystems zum Zuführen von Wasser gemäß verschiedenen Ausführungsbeispielen;
- Figur 5A: ein Ablaufdiagramm eines Verfahrens zur Aufzucht von Pflanzen gemäß verschiedenen Ausführungsbeispielen;
- Figur 5B: ein Ablaufdiagramm des Zuführens von Wasser zu und Ablassens von Wasser aus den Bewässerungswannen mittels der Bewässerungsvorrichtung des Verfahrens zur Aufzucht von Pflanzen gemäß verschiedenen Ausführungsbeispielen;
- Figur 6: eine Darstellung einer Vorrichtung zum Zuführen von Nährstoffen der Bewässerungsvorrichtung gemäß verschiedenen Ausführungsbeispielen;
- Figur 7: eine Überblicksdarstellung der Bewässerungsvorrichtung mit der Vorrichtung zum Zuführen von Nährstoffen gemäß verschiedenen Ausführungsbeispielen;
- Figur 8: eine schematische Darstellung eines Sensors zum Ermitteln eines Leitwerts des Wassers in dem Wasserkreislaufsystem gemäß verschiedenen Ausführungsbeispielen;
- Figur 9A: eine Darstellung einer Vorrichtung zum Reinigen des Wassers der Bewässerungsvorrichtung gemäß verschiedenen Ausführungsbeispielen;
- Figur 9B: eine Querschnittansicht der Vorrichtung zum Reinigen des Wassers der Bewässerungsvorrichtung gemäß verschiedenen Ausführungsbeispielen;
- Figur 10: ein Ablaufdiagramm eines Verfahrens zur Aufzucht von Pflanzen gemäß verschiedenen Ausführungsbeispielen;
- Figur 11: eine Querschnittansicht der Vorrichtung zur Aufzucht von Pflanzen gemäß verschiedenen Ausführungsbeispielen aus einer seitlichen Perspektive;
- Figur 12: eine Querschnittansicht der Vorrichtung zur Aufzucht von Pflanzen gemäß verschiedenen Ausführungsbeispielen aus einer frontalen Perspektive.

In der folgenden ausführlichen Beschreibung wird auf die beigefügten Zeichnungen Bezug genommen, die Teil dieser Beschreibung bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

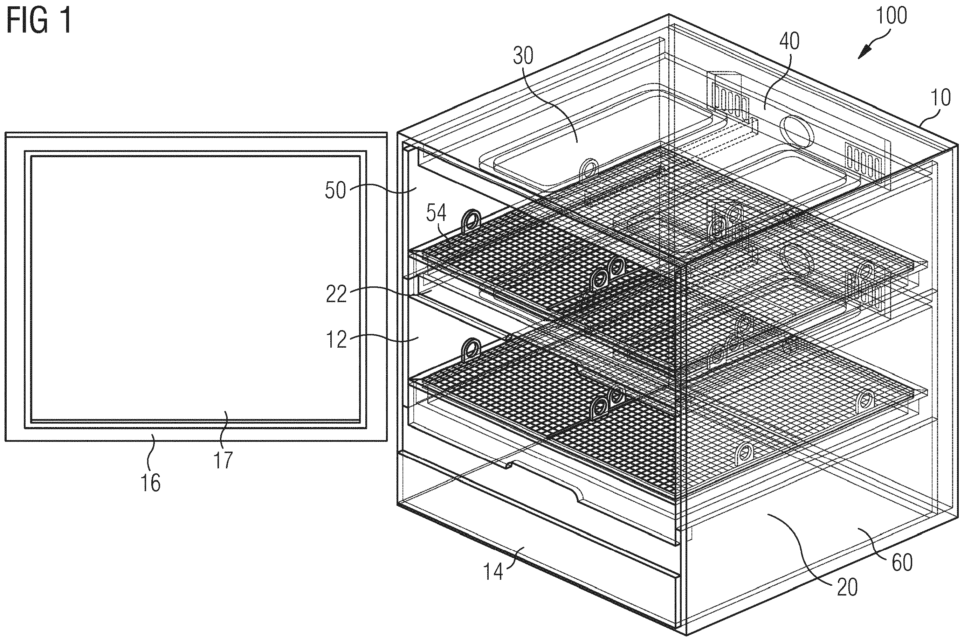

Eine Vorrichtung zur Aufzucht von Pflanzen gemäß verschiedenen Ausführungsbeispielen ist in Figur 1 dargestellt.

Wie in Fig.1 dargestellt, kann die Vorrichtung zur Aufzucht von Pflanzen ein schrankartiges Gehäuse 10 aufweisen, das mit einem Aufnahmeraum 12, einem Sockel 14 und einer Tür 16, die eine Beobachtungsöffnung 17 aufweisen kann, ausgestattet sein kann. Des Weiteren kann die Vorrichtung eine Bewässerungsvorrichtung 20 und mindestens eine Beleuchtungsvorrichtung 30 aufweisen. Ferner kann in der Vorrichtung eine Steuerungseinheit 60 vorgesehen sein, die vorzugsweise in dem Sockel 14 der Vorrichtung untergebracht sein kann, wobei die Steuerungseinheit 60 mittels einer Programmsteuerung die Beleuchtungsvorrichtung 30 und die Bewässerungsvorrichtung 20 ansteuern kann. Des Weiteren kann die Vorrichtung zur Aufzucht von Pflanzen eine Klimatisierungseinrichtung 40 aufweisen.

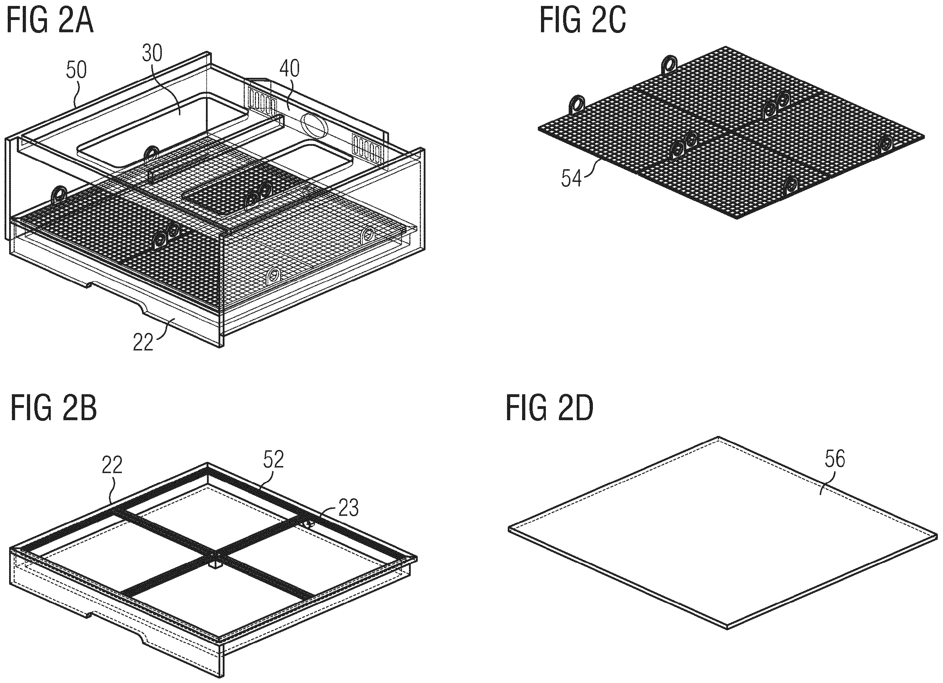

In den Aufnahmeraum 12 der Vorrichtung zur Aufzucht von Pflanzen können, je nach Größe der Vorrichtung, eine oder mehrere schubladenartig ausgebildete Aufzuchteinheiten 50 eingebracht werden. Die Aufzuchteinheiten 50 können jeweils eine Bewässerungswanne 22 und einen oder mehrere Mattenträger 54 aufweisen und werden unter Bezugnahme auf Fig.2A bis Fig.2D beschrieben werden.

Fig.2A zeigt eine Aufzuchteinheit zum Einbringen in die Vorrichtung zur Aufzucht von Pflanzen gemäß verschiedenen Ausführungsbeispielen. Fig.2B zeigt eine Bewässerungswanne einer Aufzuchteinheit gemäß verschiedenen Ausführungsbeispielen. Fig.2C zeigt einen Mattenträger zum Einsetzen auf eine Bewässerungswanne gemäß verschiedenen Ausführungsbeispielen. Fig.2D zeigt eine Saatmatte zum Auflegen auf einen Mattenträger gemäß verschiedenen Ausführungsbeispielen

Wie in Fig.2A dargestellt, kann jede Aufzuchteinheit 50 aus einer Bewässerungswanne 22 mit der dazugehörigen, darüber angeordneten Beleuchtungsvorrichtung 30 bestehen. Dabei kann jede Aufzuchteinheit 50 sozusagen ein Stockwerk definieren, in das Pflanzen in den Aufnahmeraum 12 der Vorrichtung eingebracht und dort aufgezogen werden können. Zum Einbringen von Pflanzen in den Aufnahmeraum 12 kann, wie in Fig.2B dargestellt, jede der Bewässerungswannen 22 eine vorzugsweise in sich unterteilte, rahmenartige Struktur aufweisen, die ein bis vier Einlegeöffnungen 52 bilden kann. Auf die rahmenartige Struktur der Einlegeöffnungen 52 können ein bis vier Mattenträger 54 (Fig.2C) unterschiedlicher Größe aufgelegt werden, die wiederum mit entsprechenden Saatmatten 56 (Fig.2D) bestückt werden können. Zudem kann jede Bewässerungswanne 22 einen Wasser-Zulauf und -Ablauf 23 aufweisen.

Gemäß verschiedenen Ausführungsbeispielen kann das für das Pflanzenwachstum notwendige Wasser mittels des Wasser-Zulaufs und -Ablaufs 23 in die Bewässerungswanne 22 eingelassen bzw. daraus entfernt werden (siehe Fig.2B). Dafür kann eine Bewässerungsvorrichtung gemäß verschiedenen Ausführungsbeispielen, beispielsweise die Bewässerungsvorrichtung 20 (siehe Fig.1), ein Wasserkreislaufsystem aufweisen.

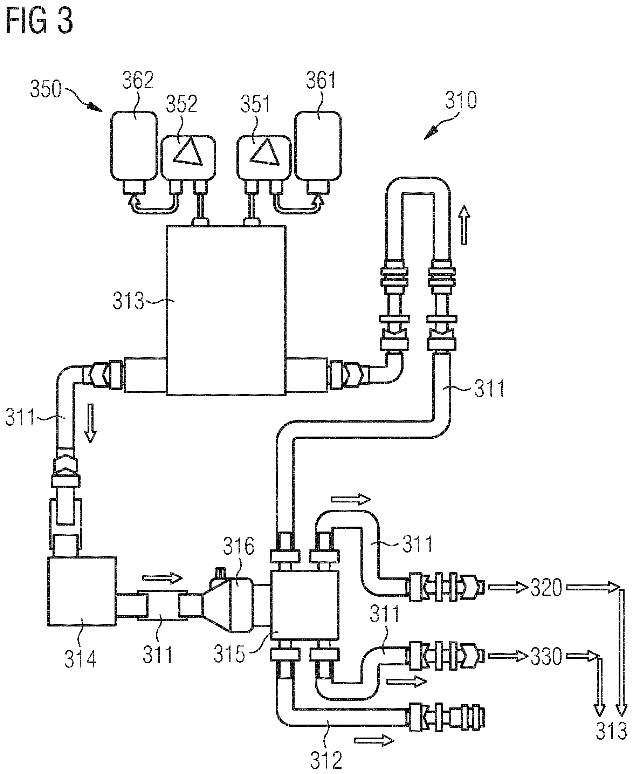

Fig.3 zeigt eine schematische Darstellung eines Wasserkreislaufsystems zum Zuführen von Wasser und Nährstoffen zu den Pflanzen gemäß verschiedenen Ausführungsbeispielen.

Es ist zu bemerken, dass in verschiedenen Ausführungsbeispielen Elemente, Bauteile, Materialien, Wirkungen, Abmessungen, Abstände usw. von Vorrichtungen oder Teilen davon, welche im Zusammenhang mit Fig.3 bis Fig.12 beschrieben sind, denjenigen entsprechen können, welche im Zusammenhang mit Fig.1 und Fig.2 beschrieben sind. Dasselbe gilt im Hinblick auf Elemente, Bauteile, Materialien, Wirkungen, Abmessungen, Abstände usw. von Vorrichtung oder Teilen davon, die im Zusammenhang mit einer der Fig.3 bis Fig.12 aufgeführt und erläutert sind, für Ausführungsbeispiele, die unter Bezugnahme auf irgendeine der anderen Figuren beschrieben sind. Auf eine Wiederholung kann deshalb verzichtet werden, und die Elemente, Bauteile, Materialien, Wirkungen, Abmessungen, Abstände usw. können mit denselben Bezugszeichen versehen sein. Es ist ferner zu beachten, dass die Liste der genannten Materialien aller beschriebenen Elemente nicht abschließend ist, sondern weitere Materialien verwendet werden können, wenn deren Verwendung sinnvoll ist.

Das in Fig.3 schematisch dargestellte Wasserkreislaufsystem 310 kann ein Leitungssystem aus Leitungen 311 und Leitungen 312 aufweisen, durch die Wasser mittels einer Wasserkreislauf-Pumpe 314 und einem (Verteiler-)Ventil 315 aus einem Wassertank 313 zu dem Wasser-Zulauf 23 bzw. von dem Wasser-Ablauf 23 der Bewässerungswanne 22 (siehe Fig.2B) gepumpt werden kann. Eine Durchflussrichtung des Wassers in dem Wasserkreislaufsystem 310 ist in der Fig.3 mittels neben den Leitungen 311 und den Leitungen 312 angeordneten Pfeilen angegeben.

Die Wasserkreislauf-Pumpe 314 kann beispielsweise eine Pumpleistung in einem Bereich von ungefähr 0 l/min bis ungefähr 20 l/min, beispielsweise in einem Bereich von ungefähr 2 l/min bis ungefähr 15 l/min, beispielsweise in einem Bereich von ungefähr 4 l/min bis ungefähr 10 l/min aufweisen. Der Wassertank 313 kann beispielsweise ein Volumen in einem Bereich von ungefähr 12 l bis ungefähr 25 l, optional von ungefähr 15 l bis ungefähr 23 l, optional von ungefähr 17 l bis ungefähr 20 l Wasser fassen. Eine Bewässerungswanne 22 kann beispielsweise ein Volumen in einem Bereich von ungefähr 5 l bis ungefähr 10 l, optional von ungefähr 6 l bis ungefähr 9 l, optional von ungefähr 7 l bis ungefähr 8 l fassen.

Das Leitungssystem aus Leitungen 311, 312 kann beispielsweise Leitungen aus Schlauchmaterial, wie beispielsweise Kunststoff, Gummi, Verbundmaterialien, Metall und/oder Glas, und/oder einen Verbund dieser Materialien aufweisen.

Die Leitungen des Leitungssystems können beispielsweise einen Innendurchmesser in einem Bereich von ungefähr 5 mm bis ungefähr 20 mm aufweisen, beispielsweise in einem Bereich von ungefähr 7 mm bis ungefähr 18 mm, beispielsweise in einem Bereich von ungefähr 9 mm bis ungefähr 15 mm.

Das Leitungssystem kann außerdem weitere Ventile, Anschlüsse, Verbindungsstücke, Reduzierstücke und andere zur Montage von Leitungssystemen übliche Elemente aufweisen.

Das (Verteiler-)Ventil 315 kann als ein Vier-Wege-Ventil 315 ausgeführt sein.

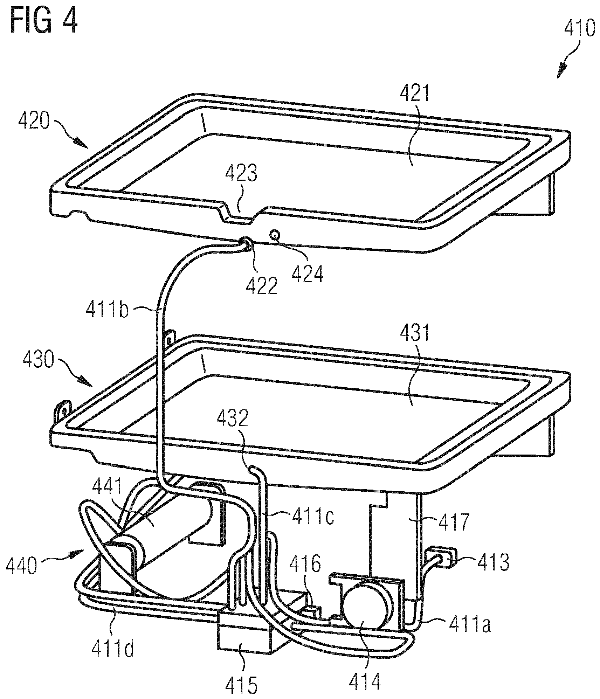

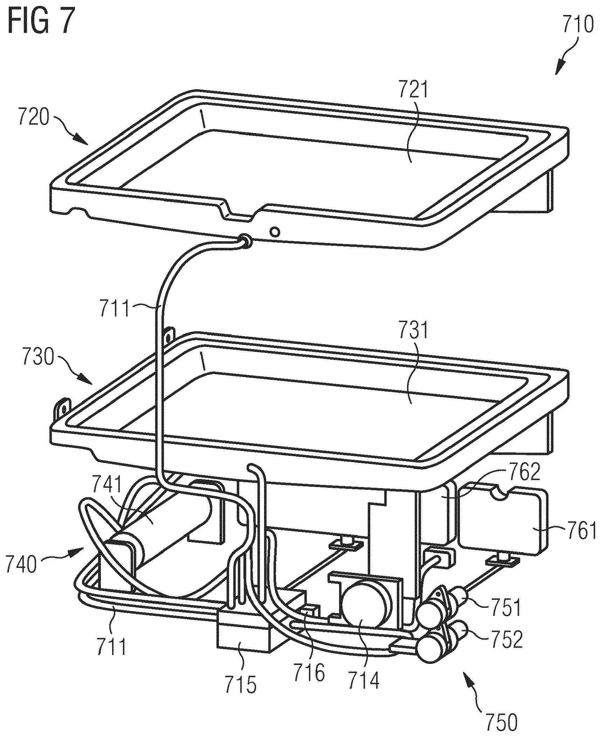

Das Wasserkreislaufsystem 310 kann in verschiedenen Ausführungsbeispielen dazu eingerichtet sein, dass das in dem Wassertank 313 vorhandene Wasser mittels der Wasserkreislauf-Pumpe 314 und des Ventils 315 durch die Leitungen 311 hindurch mindestens einem Einzelkreislauf 320, 330 zugeführt wird. Der mindestens eine Einzelkreislauf 320, 330 wird unter Bezugnahme auf Fig.4 und Fig.7 ausführlich beschrieben werden. Des Weiteren kann das Wasserkreislaufsystem 310 dazu eingerichtet sein, dass das Wasser durch die Leitung 312 hindurch einem weiteren Einzelkreislauf (nicht dargestellt) zugeführt wird oder dass das Wasser durch die Leitung 312 hindurch aus dem Wasserkreislaufsystem 310 abgelassen wird. Der mindestens eine Einzelkreislauf 320, 330 kann ferner dazu eingerichtet sein, dass das zugeführte Wasser wieder zu dem Wassertank 313 zurückgeführt wird.

Das Wasserkreislaufsystem 310 der Bewässerungsvorrichtung 20 kann ferner in verschiedenen Ausführungsbeispielen eine Vorrichtung zum Zuführen von Nährstoffen 350 aufweisen, wie in Fig.3 dargestellt. Die Vorrichtung zum Zuführen von Nährstoffen 350 kann dazu eingerichtet sein, dem Wasser in dem Wasserkreislaufsystem 310 der Bewässerungsvorrichtung 20 Nährstoffe und/oder Salze zuzuführen. Beispielsweise kann die Vorrichtung zum Zuführen von Nährstoffen 350 eingerichtet sein, dem Wasser in dem Wasserkreislaufsystem 310 mineralische und/oder organische Nährstoffe, wie beispielsweise mineralischer und/oder organischer Dünger, und/oder Säuren und/oder Basen, zuzuführen.

Wie weiter in Fig.3 schematisch dargestellt, kann dafür das Wasserkreislaufsystem 310 der Bewässerungsvorrichtung 20 gemäß verschiedenen Ausführungsbeispielen eine oder mehrere Pumpen 351, 352 aufweisen, die vorzugsweise als peristaltische Pumpen 351, 352 ausgebildet sein können. Dabei kann jede der Pumpen 351, 352 derart mit einem jeweiligen Vorratsbehälter 361, 362 gekoppelt sein, dass die jeweilige Pumpe 351, 352 eine in dem entsprechenden Vorratsbehälter 361, 362 bevorratete Flüssigkeit dem in dem Wasserkreislaufsystem 310 umgepumpten Wasser zugeben kann.

Beispielsweise können die Pumpen 351, 352 derart mit dem Wasserkreislaufsystem 310 gekoppelt sein, dass dem in dem Wasserkreislaufsystem 310 umgepumpten Wasser die in den Vorratsbehältern 361, 362 bevorrateten Flüssigkeiten über den Wassertank 313 zugeführt wird oder dass die in den Vorratsbehältern 361, 362 bevorrateten Flüssigkeiten mittels der Leitungen 311, 312 zugeführt werden.

Beispielsweise kann eine erste Pumpe 351 mit einem ersten Vorratsbehälter 361 verbunden sein, in dem eine Nährstofflösung, vorzugsweise ein mineralischer und/oder organischer Dünger, bevorratet sein kann. Beispielsweise kann die erste Pumpe 351 mit dem ersten Vorratsbehälter 361 verbunden sein, in dem der mineralische Dünger bevorratet sein kann, oder die erste Pumpe 351 kann mit dem ersten Vorratsbehälter 361 verbunden sein, in dem der organische Dünger bevorratet sein kann. Alternativ kann die Vorrichtung zum Zuführen von Nährstoffen 350 zwei Pumpen 351, 352 und zwei Vorratsbehälter 361, 362 aufweisen, wobei beispielsweise der Vorratsbehälter 361 mineralischen Dünger bevorratet und der Vorratsbehälter 362 organischen Dünger bevorratet.

Außerdem kann die zweite Pumpe 352 mit dem zweiten Vorratsbehälter 362 verbunden sein, wobei in dem zweiten Vorratsbehälter 362 eine Säure und/oder Base bevorratet sein kann. Alternativ dazu kann die zweite Pumpe 352, die mit dem zweiten Vorratsbehälter 362 gekoppelt ist, und eine dritte Pumpe (nicht dargestellt), die mit einem dritten Vorratsbehälter (nicht dargestellt) verbunden ist, aufweisen, wobei in dem zweiten Vorratsbehälter 362 eine Säure bevorratet sein kann und in dem dritten Vorratsbehälter (nicht dargestellt) eine Base bevorratet sein kann. Als weitere Alternative kann die erste Pumpe 351 mit dem ersten Vorratsbehälter 361 verbunden sein, in dem der mineralische Dünger bevorratet sein kann, die zweite Pumpe 352 kann mit dem zweiten Vorratsbehälter 362 verbunden sein, in dem der organische Dünger bevorratet sein kann, die dritte Pumpe (nicht dargestellt) kann mit dem dritten Vorratsbehälter (nicht dargestellt) verbunden sein, in dem die Säure bevorratet sein kann, und eine vierte Pumpe (nicht dargestellt) kann mit einem vierten Vorratsbehälter (nicht dargestellt) verbunden sein, in dem die Base bevorratet sein kann.

Die Steuerungseinheit 60 (siehe Fig.1) kann dazu eingerichtet sein, die Bewässerungsvorrichtung 20 derart anzusteuern, dass der einen oder mehreren Bewässerungswannen 22, die jeweils unter den Saatmatten 56 angeordnet sind, Wasser aus dem Wassertank 313 zugeführt wird. Dazu kann das Wasserkreislaufsystem 310 einen oder mehrere Einzelkreisläufe aufweisen. Beispielsweise kann das Wasserkreislaufsystem 310 einen ersten Einzelkreislauf 320 und einen zweiten Einzelkreislauf 330 aufweisen. Das Wasserkreislaufsystem 310 ist jedoch nicht auf die Einzelkreisläufe 320, 330 beschränkt, sondern kann weitere Einzelkreisläufe (nicht dargestellt) aufweisen. Das Zuführen von Wasser zu den Bewässerungswannen 22 mittels des Wasserkreislaufsystems der Bewässerungsvorrichtung 20 wird unter Bezugnahme auf Fig.4 genauer beschrieben werden.

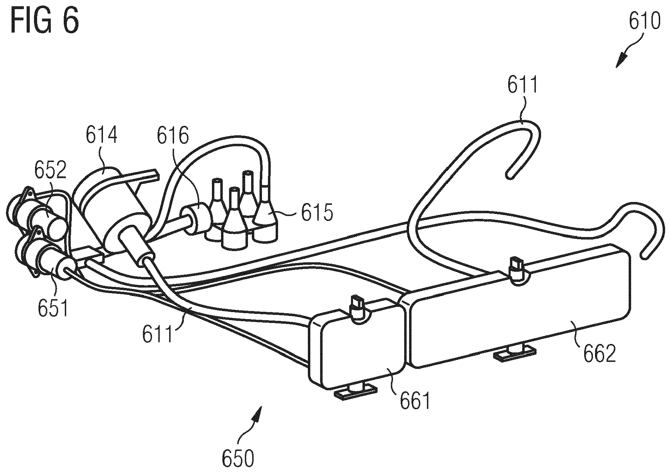

Die Steuerungseinheit 60 kann ferner dazu eingerichtet sein, die Pumpen 351, 352 der Vorrichtung zum Zuführen von Nährstoffen 350 derart zu steuern, dass dem Wasser in dem Wasserkreislaufsystem 310 Nährstoffe aus den Vorratsbehältern 361, 362 zugeführt werden. Dies wird unter Bezugnahme auf Fig.6 genauer beschrieben werden.

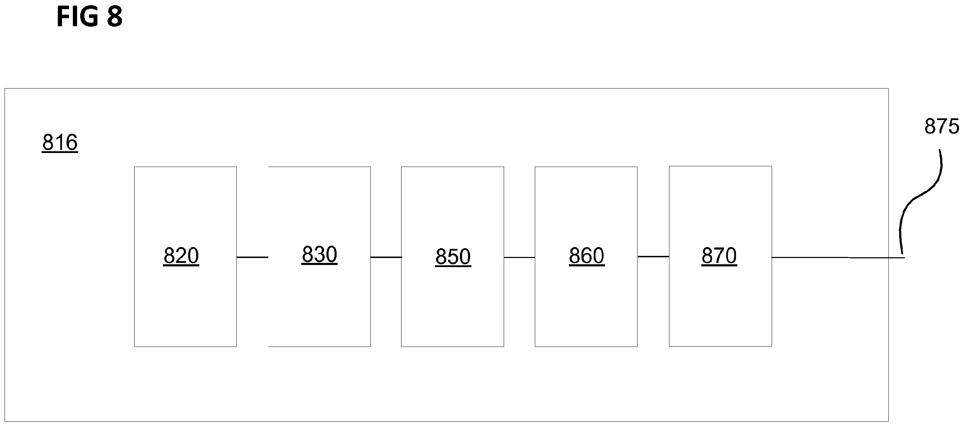

Des Weiteren kann das Wasserkreislaufsystem 310, wie in Fig.3 dargestellt, einen Sensor 360 aufweisen. Der Sensor 360 kann dazu eingerichtet sein, bestimmte Messwerte zu ermitteln, wobei die Steuerungseinheit 60 dazu eingerichtet sein kann, die Messwerte von dem Sensor 360 zu empfangen und eine Zusammensetzung des Wassers unter Verwendung der Messwerte zu steuern. Der Sensor 360 wird unter Bezugnahme auf Fig.8 genauer beschrieben werden.

Fig.4 zeigt eine Darstellung des Wasserkreislaufsystems zum Zuführen von Wasser gemäß verschiedenen Ausführungsbeispielen.

Wie in Fig.4 dargestellt, kann das Wasserkreislaufsystem 410 der Bewässerungsvorrichtung 20 in verschiedenen Ausführungsbeispielen einen bis mehrere Einzelkreisläufe 420, 430 und 440 aufweisen. Wie oben bereits unter Bezugnahme auf Fig.3 beschrieben, kann das Wasserkreislaufsystem 410 eine oder mehrere Leitungen 411, einen Wassertank (nicht dargestellt), eine Wasserkreislauf-Pumpe 414, ein Ventil 415 (beispielsweise ein Verteilerventil 415), einen ersten Sensor 416 und einen zweiten Sensor 417 aufweisen.

Die Wasserkreislaufpumpe 414 kann beispielsweise eine Pumpleistung in einem Bereich von ungefähr 0 l/min bis ungefähr 20 l/min, beispielsweise in einem Bereich von ungefähr 2 l/min bis ungefähr 15 l/min, beispielsweise in einem Bereich von ungefähr 4 l/min bis ungefähr 10 l/min aufweisen. Der Wassertank (nicht dargestellt) kann beispielsweise ein Volumen in einem Bereich von ungefähr 12 l bis ungefähr 25 l, optional von ungefähr 15 l bis ungefähr 23 l, optional von ungefähr 17 l bis ungefähr 20 l Wasser fassen.

Ein erster Wasserkreislauf 420 (anders ausgedrückt ein erster Einzelkreislauf 420) des Wasserkreislaufsystems 410 kann dazu bereitgestellt sein, eine erste Bewässerungswanne 421 einer ersten Aufzuchteinheit 50 (nicht dargestellt) zu befüllen, wobei die erste Aufzuchteinheit 50 ein oberes Stockwerk in der Vorrichtung bereitstellen bzw. bilden kann. Außerdem kann ein zweiter Wasserkreislauf 430 (anders ausgedrückt ein zweiter Einzelkreislauf 430) dazu bereitgestellt sein, eine zweite Bewässerungswanne 431 einer zweiten Aufzuchteinheit 50 (nicht dargestellt) zu befüllen, wobei die zweite Aufzuchteinheit 50 ein unteres Stockwerk in der Vorrichtung bereitstellen bzw. bilden kann. Alternativ kann die erste Aufzuchteinheit 50 mit der ersten Bewässerungswanne ein unteres Stockwerk in der Vorrichtung bereitstellen, und die zweite Aufzuchteinheit 50 mit der zweiten Bewässerungswanne kann ein oberes Stockwerk in der Vorrichtung bereitstellen (nicht dargestellt).

Dabei können, wie oben unter Bezugnahme auf Fig. 2A-2D dargestellt, in jeder der Aufzuchteinheiten 50 eine bis vier Mattenträger 54 (nicht dargestellt) in die entsprechenden Einlegeöffnungen 52 (nicht dargestellt) eingelegt und mit Saatmatten 56 (nicht dargestellt) bestückt werden. Anders ausgedrückt können auf diese Weise in jedem Stockwerk der Vorrichtung zur Aufzucht von Pflanzen bis zu vier verschiedene Pflanzensorten aus entsprechendem, auf den Saatmatten 56 aufgebrachtem Saatgut 58 (nicht dargestellt) gezogen werden.

Jede der Bewässerungswannen 421, 431 kann beispielsweise ein Volumen in einem Bereich von ungefähr 5 l bis ungefähr 10 l, optional von ungefähr 6 l bis ungefähr 9 l, optional von ungefähr 7 l bis ungefähr 8 l aufweisen. Ferner kann die erste Bewässerungswanne 421 an ihrer Rückseite einen ersten Zulauf 422, eine erste Überlaufeinkerbung 423 und einen ersten Ablauf 424 aufweisen, und die zweite Bewässerungswanne 431 kann an ihrer Rückseite einen zweiten Zulauf 432, eine zweite Überlaufeinkerbung (nicht dargestellt) und einen zweiten Ablauf (nicht dargestellt) aufweisen.

In dem Wasserkreislaufsystem 410 kann der Wassertank (nicht dargestellt) ein Ansaugstück 413 aufweisen, wobei das Ansaugstück 413 mittels einer entsprechenden Leitung 411a mit der Wasserkreislaufpumpe 414 verbunden sein kann. Die Wasserkreislaufpumpe 414 kann dazu eingerichtet sein, mittels des Ansaugstücks 413 Wasser aus dem Wassertank durch die Leitung 411a hindurch zu saugen und das Wasser mittels des (Verteiler-) Ventils 415 dem ersten Einzelkreislauf bzw. Wasserkreislauf 420 und/oder dem zweiten Einzelkreislauf bzw. Wasserkreislauf 430 und/oder weiteren Einzelkreisläufen bzw. Wasserkreisläufen, beispielsweise dem dritten Einzelkreislauf bzw. Wasserkreislauf 440, zuzuführen.

Beispielsweise kann das (Verteiler-)Ventil 415 dazu eingerichtet sein, in dem ersten Einzelkreislauf 420 (bzw. Wasserkreislauf 420) der ersten Bewässerungswanne 421 mittels einer weiteren entsprechenden Leitung 411b und mittels des ersten Zulaufs 422 Wasser zuzuführen. Analog kann das (Verteiler-)Ventil 415 dazu eingerichtet sein, in dem zweiten Einzelkreislauf 430 (bzw. dem zweiten Wasserkreislauf 430) der zweiten Bewässerungswanne 431 mittels einer weiteren entsprechenden Leitung 411c und mittels des zweiten Zulaufs 432 Wasser zuzuführen.

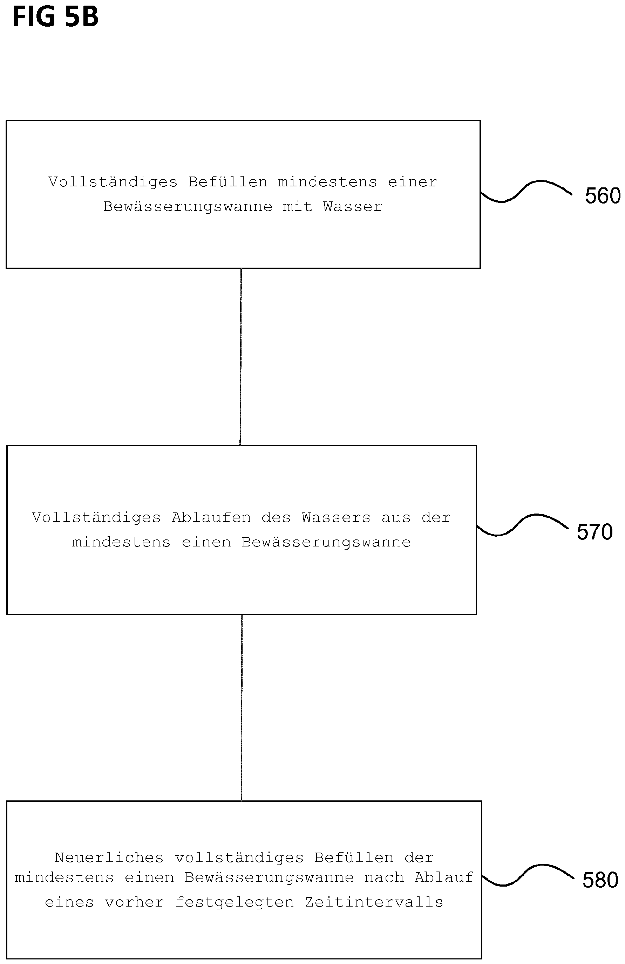

Die Bewässerungsvorrichtung 20 kann dazu eingerichtet sein, mittels der Steuerungseinrichtung 60 derart angesteuert zu werden, dass mittels des ersten Einzelkreislaufs 420 und mittels des zweiten Einzelkreislaufs 430 den in den Aufnahmeraum 12 eingebrachten Saatmatten Wasser zugeführt wird. Beispielsweise kann die Steuerungseinrichtung 60 dazu eingerichtet sein, das (Verteiler-)Ventil 415 in dem Wasserkreislaufsystem 410 der Bewässerungsvorrichtung 20 derart anzusteuern, dass mittels des ersten Einzelkreislaufs 420 und mittels des zweiten Einzelkreislaufs 430 jeder der Bewässerungswannen 421, 431 in regelmäßigen Intervallen Wasser zugeführt wird. Dadurch kann gewährleistet werden, dass die in den Aufnahmeraum 12 eingebrachten Samen bzw. Pflanzen (nicht dargestellt) mittels der ersten Bewässerungswanne 421 bzw. der zweiten Bewässerungswanne 431 mit Wasser versorgt werden. Das Verfahren zum Zuführen von Wasser zu den Bewässerungswannen 421, 431 wird unter Bezugnahme auf Fig.5B genauer beschrieben werden.

Wie oben beschrieben, wird in dem ersten Einzelkreislauf 420 der ersten Bewässerungswanne 421 Wasser zugeführt, und in dem zweiten Einzelkreislauf 430 wird der zweiten Bewässerungswanne 431 Wasser zugeführt. Dabei sind die erste Überlaufeinkerbung 423 und die zweite Überlaufeinkerbung (nicht dargestellt) dazu eingerichtet, während des Befüllens der jeweiligen ersten Bewässerungswanne 421 bzw. zweiten Bewässerungswanne 431 mit Wasser aus dem Wasserkreislaufsystem 410 zu gewährleisten, dass überschüssiges Wasser aus der ersten Bewässerungswanne 421 bzw. der zweiten Bewässerungswanne 431 ablaufen kann.

Der erste Ablauf 424 und der zweite Ablauf (nicht dargestellt) können dazu eingerichtet sein, dass das in den Bewässerungswannen 421, 431 befindliche Wasser aus den Bewässerungswannen 421, 431 vollständig ablaufen kann. Der Wassertank (nicht dargestellt) kann dazu eingerichtet sein, das aus den Bewässerungswannen 421, 431 ablaufende Wasser wieder aufzufangen. Anders ausgedrückt ist das Wasserkreislaufsystem 410 dazu eingerichtet, dass das aus den Bewässerungswannen 421, 431 ablaufende Wasser darin verbleibt.

Das Wasserkreislaufsystem 410 kann in verschiedenen Ausführungsbeispielen des Weiteren einen oder mehrere Filter (nicht dargestellt) aufweisen, die dazu eingerichtet sind, Wurzel- und Blattreste von in dem Aufnahmeraum 12 wachsenden Pflanzen und/oder Ablagerungen der Nährstoffe aufzufangen. Beispielsweise kann ein Filter (nicht dargestellt) des Wasserkreislaufsystems 410 vor dem Ansaugstück 413 in dem Wassertank (nicht dargestellt) angeordnet sein.

In verschiedenen Ausführungsbeispielen kann die Bewässerungsvorrichtung 20 ferner verschiedene Sensoren aufweisen. Beispielsweise kann das Wasserkreislaufsystem 410 der Bewässerungsvorrichtung 20 einen ersten Sensor 416 zum Ermitteln des Leitwerts des Wassers aufweisen. Wie in Fig.4 dargestellt, kann der erste Sensor 416 in dem Wasserkreislaufsystem 410 beispielsweise zwischen der Wasserkreislaufpumpe 414 und dem (Verteiler-)Ventil 415 angeordnet sein. Der erste Sensor 416 wird unter Bezugnahme auf Fig.8 genauer beschrieben werden.

Außerdem kann das Wasserkreislaufsystem 410 der Bewässerungsvorrichtung 20 einen zweiten Sensor 417 zum Ermitteln des Wasserstands in dem Wassertank (nicht dargestellt) aufweisen. Wie in Fig.4 dargestellt, kann der zweite Sensor 417 beispielsweise an einer Außenseite einer Seitenwand des Wassertanks angeordnet sein.

Der zweite Sensor 417 kann beispielsweise als ein kapazitiver Sensor zum Ermitteln des Füllstands des Wassers in dem Wassertank ausgeführt sein. Ferner kann der zweite Sensor 417 dazu eingerichtet sein, den Füllstand des Wassers in dem Wassertank kontaktlos zu ermitteln.

Alternativ können der erste Sensor 416 zum Ermitteln des Leitwerts des Wassers und der zweite Sensor 417 zum Ermitteln des Wasserstands in dem Wassertank (nicht dargestellt) zusammen in einem Gehäuse angeordnet sein.

Als weitere Alternative kann der Sensor zum Ermitteln des Leitwerts des Wassers dazu eingerichtet sein, auch den Wasserstand in dem Wassertank (nicht dargestellt) zu ermitteln. Anders ausgedrückt kann der erste Sensor 416 als ein kombinierter Sensor 416 (im Folgenden auch als Sensor 416 bezeichnet) zum Ermitteln sowohl des Leitwerts des Wassers als auch zum Ermitteln des Wasserstands in dem Wassertank ausgeführt sein. Beispielsweise kann der Sensor 416 dazu eingerichtet ist, den Leitwert des Wassers und den Wasserstand des Wassers kontaktlos zu ermitteln. Beispielsweise kann der Sensor 416 ein kapazitiver Sensor 416 sein.

In verschiedenen Ausführungsbeispielen können der erste Sensor 416 (bzw. der Sensor 416) und/oder der zweite Sensor 417 dazu eingerichtet sein, Messwerte an die Steuerungseinheit 60 auszugeben, anders ausgedrückt, der Steuerungseinheit Messwerte zuzuführen.

Entsprechend kann die Steuerungseinheit 60 in verschiedenen Ausführungsbeispielen dazu eingerichtet sein, Messwerte des ersten Sensors 416 (bzw. des Sensors 416) und/oder Messwerte des zweiten Sensors 417 zu empfangen. Außerdem kann die Steuerungseinheit 60 beispielsweise dazu eingerichtet sein, ein Warnsignal zu erzeugen und auszugeben, wenn der Wasserstand in dem Wassertank unter einen bestimmten Wert absinkt.

Der dritte Einzelkreislauf 440 des Wasserkreislaufsystems 410 kann in verschiedenen Ausführungsbeispielen zum Reinigen des Wassers bereitgestellt sein. Dazu kann das Wasserkreislaufsystem 410 eine Vorrichtung zum Reinigen des Wassers 441 aufweisen. Das (Verteiler-)Ventil 415 kann entsprechend dazu eingerichtet sein, in dem dritten Einzelkreislauf 440 der Vorrichtung zum Reinigen des Wassers 441 mittels weiterer entsprechender Leitungen 411d Wasser zuzuführen.

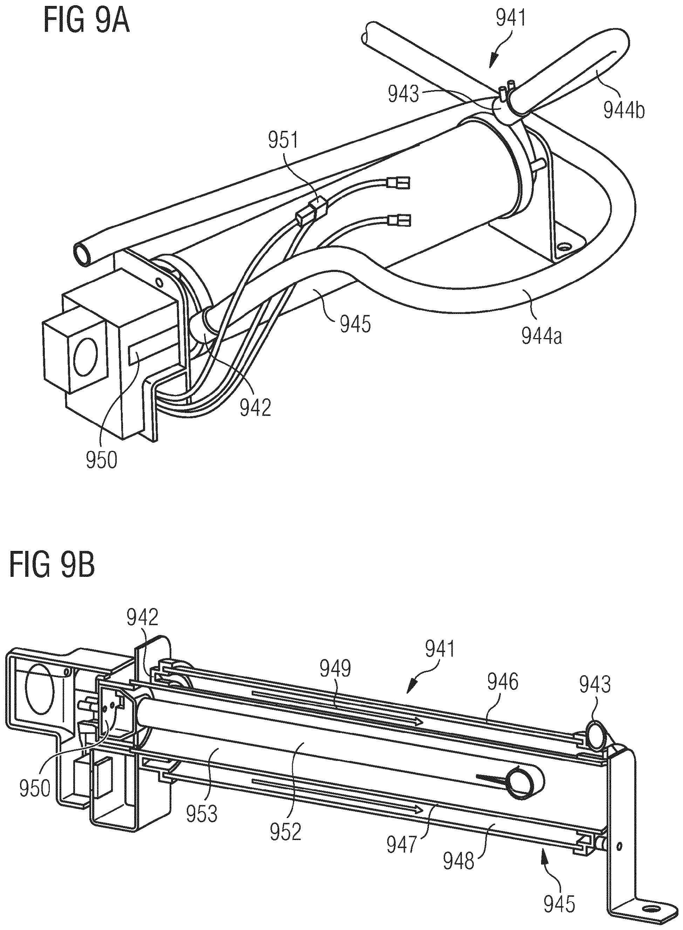

Die Vorrichtung zum Reinigen des Wassers 441 kann dazu eingerichtet sein, das Wassers mittels Bestrahlens des Wassers mit Licht in einem Wellenlängenbereich im UV-C-Bereich zu reinigen. Die Vorrichtung zum Reinigen des Wassers 441 kann eine Lichtquelle (nicht dargestellt) zum Abstrahlen von Licht mit einer Wellenlänge im UV-C-Bereich aufweisen. Die Lichtquelle (nicht dargestellt) kann dazu eingerichtet sein, Licht in einem Wellenlängenbereich von ungefähr 200 nm bis ungefähr 280 nm abzustrahlen. Die Vorrichtung zum Reinigen des Wassers 441 wird unter Bezugnahme auf Fig.9A und Fig.9B genauer beschrieben werden.

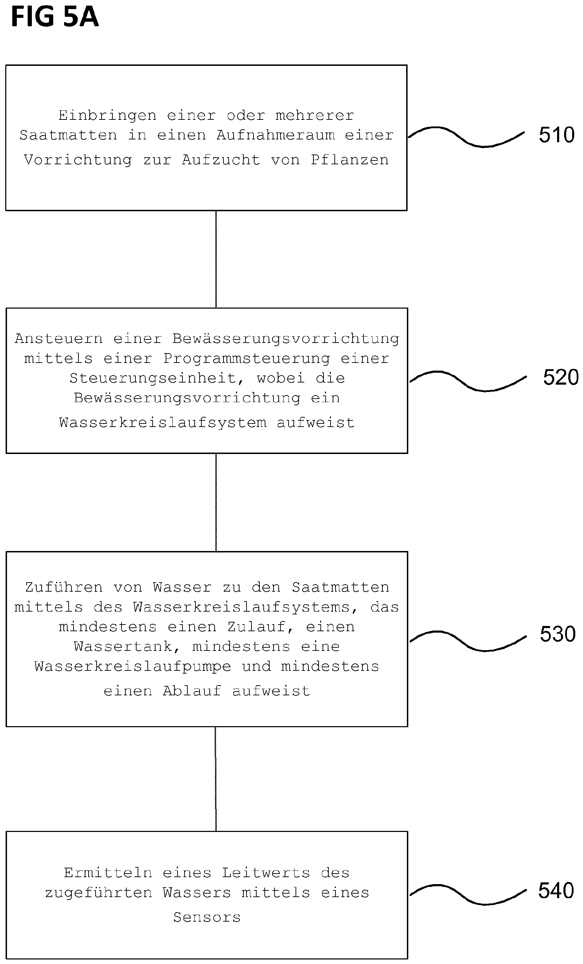

Fig.5A zeigt ein Ablaufdiagramm eines Verfahrens zur Aufzucht von Pflanzen gemäß verschiedenen Ausführungsbeispielen.

Wie in Fig.5A dargestellt, weist das Verfahren zur Aufzucht von Pflanzen in verschiedenen Ausführungsbeispielen auf: Einbringen einer oder mehrere Saatmatten in einen Aufnahmeraum einer Vorrichtung zur Aufzucht von Pflanzen, 510; Ansteuern einer Bewässerungsvorrichtung mittels einer Programmsteuerung einer Steuerungseinheit, wobei die Bewässerungsvorrichtung ein Wasserkreislaufsystem aufweist, 520; Zuführen von Wasser zu den Saatmatten mittels des Wasserkreislaufsystems, das mindestens einen Zulauf, einen Wassertank, mindestens eine Wasserkreislaufpumpe und mindestens einen Ablauf aufweist, 530; und Ermitteln eines Leitwerts des zugeführten Wassers mittels eines Sensors, 540.

In verschiedenen Ausführungsbeispielen kann das Verfahren zur Aufzucht von Pflanzen ferner ein Ermitteln eines Wasserstands in dem Wassertank der Bewässerungsvorrichtung aufweisen. Dabei können der Leitwert des Wassers und der Wasserstand in dem Wassertank mittels verschiedener Sensoren ermittelt werden. Alternativ können der Leitwert des Wassers und der Wasserstand in dem Wassertank mittels desselben Sensors ermittelt werden. Der Leitwert des Wassers und der Wasserstand in dem Wassertank können ferner beispielsweise kontaktlos ermittelt werden. Beispielsweise können der Leitwert des Wassers und der Wasserstand in dem Wassertank kapazitiv ermittelt werden.

Das Verfahren kann ferner ein Zuführen von Messwerten der Sensoren bzw. des Sensors zu der Steuerungseinheit aufweisen. Anders ausgedrückt kann das Verfahren ferner Empfangen von Messwerten der Sensoren bzw. des Sensors mittels der Steuerungseinheit aufweisen. Außerdem kann das Verfahren ein Erzeugen und Ausgeben eines Warnsignals, wenn der Wasserstand in dem Wassertank unter einen bestimmten Wert absinkt, mittels der Steuerungseinheit aufweisen.

In dem Verfahren zur Aufzucht von Pflanzen kann das Zuführen von Wasser zu den Saatmatten ein Zuführen von Wasser aus dem Wassertank zu einer oder mehreren Bewässerungswannen der Bewässerungsvorrichtung mittels der Bewässerungsvorrichtung aufweisen, wobei die Bewässerungswannen jeweils unter den Saatmatten angeordnet sind. Beispielsweise kann die Bewässerungsvorrichtung den Bewässerungswannen in regelmäßigen Intervallen Wasser zuführen.

In dem Verfahren kann ferner die Bewässerungsvorrichtung in verschiedenen Ausführungsbeispielen der einen oder mehreren Bewässerungswannen, die in jeder der Aufzuchteinheiten unter den jeweiligen Saatmatten angeordnet sind, Wasser und Nährstoffe zuführen. Anders ausgedrückt können in dem Verfahren zur Aufzucht von Pflanzen in jeder Aufzuchteinheit dem auf den Saatmatten angeordneten Saatgut bzw. den daraus wachsenden Pflanzen von der Bewässerungsvorrichtung mittels der Bewässerungswannen Wasser und Nährstoffe zugeführt werden.

Das Verfahren zur Aufzucht von Pflanzen kann in verschiedenen Ausführungsbeispielen ferner Zuführen von mineralischem Dünger und/oder organischem Dünger und/oder Säure und/oder Base zu dem Wasser in dem Wasserkreislaufsystem mittels mindestens einer Pumpe aufweisen. Dabei kann die Pumpe optional eine peristaltische Pumpe sein. Zum Zuführen von mineralischem Dünger und/oder organischem Dünger und/oder Säure und/oder Base zu dem Wasser kann die Steuerungseinheit die Pumpen derart ansteuern, dass diese dem Wasserkreislaufsystem auf Basis der für den Leitwert des Wassers ermittelten Werte mineralischen Dünger und/oder organischen Dünger und/oder Säure und/oder Base zuführen. Anders ausgedrückt kann die Steuerungseinheit einen Nährstoffgehalt des Wassers auf der Basis des Leitwertes des Wassers regeln.

Das Verfahren zur Aufzucht von Pflanzen kann in verschiedenen Ausführungsbeispielen ferner Aufbringen von Saatgut auf den Saatmatten aufweisen, wobei vorzugsweise Pflanzen aus dem Saatgut wachsen.

Des Weiteren kann das Verfahren in verschiedenen Ausführungsbeispielen Abrufen von individuell auf das Saatgut abgestimmten Bewässerungsdaten und/oder von individuell auf das Saatgut abgestimmten Daten zum Nährstoffbedarf aus einem Datenspeicher der Programmsteuerung aufweisen. Beispielsweise können die individuell auf das Saatgut abgestimmten Bewässerungsdaten und/oder Daten zum Nährstoffbedarf mittels der Steuerungseinheit aus einem Datenspeicher der Programmsteuerung abgerufen werden. Nachfolgend kann die Steuerungseinheit die Bewässerungsvorrichtung auf Basis der individuell auf das Saatgut abgestimmten Bewässerungsdaten und/oder Daten zum Nährstoffbedarf derart ansteuern, dass den in dem Aufnahmeraum wachsenden Pflanzen eine ihrem Wachstum förderliche Wassermenge und/oder Nährstoffmenge und/oder Nährstoffzusammensetzung zugeführt wird.

Dabei kann der Datenspeicher vorzugsweise über eine in der Vorrichtung zur Aufzucht von Pflanzen vorgesehene Internetverbindung als externer Datenspeicher vorgesehen sein. Anders ausgedrückt kann die Steuerungseinheit mittels einer Internetverbindung, die mittels entsprechender Antennen der Vorrichtung zur Aufzucht von Pflanzen bereitgestellt wird, entsprechende Daten aus einem externen Datenspeicher abrufen. Der externe Datenspeicher kann Teil einer Datenwolke (Cloud) sein, in der Daten und Applikationsprogramme verteilt und optional redundant gespeichert sein können.
In verschiedenen Ausführungsbeispielen kann das Verfahren ferner ein Identifizieren von mindestens einer Saatmatte mittels eines Programmsensors zur Steuerung der Programmsteuerung aufweisen. Beispielsweise kann die Steuerungseinheit mittels des Programmsensors zur Steuerung der Programmsteuerung RFID-Signale bzw. eine QR-Kennzeichnung bzw. einen Barcode der mindestens einen Saatmatte erfassen. Dafür kann jede der Saatmatten eine RFID-Kennzeichnung, wie beispielsweise einen RFID-Tag (anders ausgedrückt einen RFID-Transponder; anders ausgedrückt ein RFID-Etikett) und/oder einen QR-Tag (anders ausgedrückt ein QR-Etikett; anders ausgedrückt eine QR-Kennzeichnung) und/oder ein Barcode-Etikett (anders ausgedrückt eine Barcode-Kennzeichnung) aufweisen. Entsprechend kann der Programmsensor als RFID-Sensor und/oder QR-Code Sensor und/oder Barcode-Sensor vorgesehen sein. Anders ausgedrückt kann die Steuerungseinheit mittels der RFID-Signale bzw. der QR-Kennzeichnung bzw. des Barcodes der Saatmatten das auf der jeweiligen Saatmatte angeordnete Saatgut identifizieren, die auf das jeweilige Saatgut abgestimmten Bewässerungsdaten aus dem Datenspeicher abrufen und die der entsprechenden Bewässerungswanne zugeführte Wassermenge an das jeweilige Saatgut anpassen. Alternativ kann die Steuerungseinheit auf das jeweilige identifizierte Saatgut abgestimmte Intervalle, in denen die Bewässerungswannen befüllt werden, einstellen. Anders ausgedrückt kann die Steuerungseinheit die Intervalle, in denen den Bewässerungswannen Wasser zugeführt wird, an das jeweilige identifizierte Saatgut anpassen.

Ebenso kann die Steuerungseinheit mittels der RFID-Signale bzw. der QR-Kennzeichnung bzw. des Barcodes der Saatmatten das auf der jeweiligen Saatmatte angeordnete Saatgut identifizieren, die auf das jeweilige Saatgut abgestimmten Daten zum Nährstoffbedarf aus dem Datenspeicher abrufen und die der entsprechenden Bewässerungswanne zugeführte Nährstoffmenge und/oder Nährstoffzusammensetzung an das jeweilige Saatgut anpassen.

Dadurch kann gemäß dem Verfahren zur Aufzucht von Pflanzen in verschiedenen Ausführungsbeispielen mittels der Steuerungseinheit die auf das Saatgut abgestimmte Wassermenge und/oder Nährstoffmenge und/oder Nährstoffzusammensetzung eingestellt werden. Beispielsweise kann die Steuerungseinheit mittels der Programmsteuerung auf Basis der abgerufenen Bewässerungsdaten die auf das jeweilige, in der entsprechenden Aufzuchteinheit wachsende Saatgut abgestimmte Wassermenge zuführen. Alternativ kann die Steuerungseinheit die Intervalle, in denen den Bewässerungswannen Wasser zugeführt wird, an das jeweilige, in einer Aufzuchteinheit wachsende identifizierte Saatgut anpassen. Ebenso kann die Steuerungseinheit mittels der Programmsteuerung auf Basis der abgerufenen Daten zum Nährstoffbedarf die auf das jeweilige, in der entsprechenden Aufzuchteinheit wachsende Saatgut abgestimmte Nährstoffmenge und/oder Nährstoffzusammensetzung zuführen.

Anders ausgedrückt kann die Steuerungseinheit auf Basis der abgerufenen Bewässerungsdaten und/oder Daten zum Nährstoffbedarf die Bewässerungsvorrichtung derart ansteuern, dass die der entsprechenden Bewässerungswanne zugeführte Wassermenge und/oder die Länge der Intervalle, in denen die entsprechende Bewässerungswanne befüllt werden, und/oder Nährstoffmenge und/oder Nährstoffzusammensetzung auf die in der jeweiligen Aufzuchteinheit (d.h. in einem jeweiligen Stockwerk) angeordneten Pflanzen abgestimmt werden. Dafür kann die Steuerungseinheit eine Regelgröße für den Nährstoffgehalt auf der Basis der in dem Aufnahmeraum eingebrachten Pflanzen (beispielsweise entsprechend ihrer Art oder ihrer Sorte) festlegen.

Des Weiteren kann das Verfahren Aufnehmen von Bildern der in dem Aufnahmeraum aufgenommenen Saatmatten und der aus dem Saatgut entstehenden Pflanzen mittels einer Kamera aufweisen. In verschiedenen Ausführungsbeispielen kann das Verfahren zur Aufzucht von Pflanzen ferner ein Weiterleiten von Signalen von der Kamera zur Programmsteuerung, Vergleichen der mittels der Kamera aufgenommenen Bilder mit einem oder mehreren in einem Mustererkennungsspeicher der Steuerungseinheit gespeicherten Referenzbildern zum Ermitteln eines Zustands der in dem Aufnahmeraum aufgenommenen Pflanzen mittels einer Mustererkennungsvorrichtung der Steuerungseinheit, und Anpassen der Programmsteuerung an die jeweilige Pflanze und ihren Zustand aufweisen.

In verschiedenen Ausführungsbeispielen kann die Steuerungseinrichtung somit die Intervalle, in denen die Bewässerungsvorrichtung den Bewässerungswannen Wasser zuführt, auf das jeweilige Saatgut und/oder den Zustand der Pflanzen, die in den Aufnahmeraum eingebracht wurden, abstimmen. Ebenso kann die Steuerungseinrichtung Nährstoffmenge und/oder Nährstoffzusammensetzung auf das jeweilige Saatgut und/oder den Zustand der Pflanzen, die in den Aufnahmeraum eingebracht wurden, abstimmen.

In verschiedenen Ausführungsbeispielen können die Bewässerungswannen in jedem Intervall mit Wasser gefüllt werden. Beispielsweise können die Bewässerungswannen in jedem Intervall mittels eines an der Bewässerungswanne befindlichen Zulaufs mit Wasser gefüllt werden. Beispielsweise können die Bewässerungswannen in jedem Intervall einmal komplett mit Wasser gefüllt werden. Dabei kann überschüssiges Wasser mittels einer an jeder der Bewässerungswannen befindlichen Überlaufeinkerbung ablaufen. Ferner kann das Wasser nach dem Füllen mittels eines an jeder der Bewässerungswannen befindlichen Ablaufs wieder aus der Bewässerungswanne herauslaufen und in den Wassertank zurückfließen. Das Zuführen von Wasser zu den Saatmatten wird unter Bezugnahme auf Fig.5B genauer beschrieben werden.

In verschiedenen Ausführungsbeispielen kann die Bewässerungsvorrichtung in dem Verfahren zur Aufzucht von Pflanzen das Wasser mittels eines Vierwegeventils einem oder mehreren Einzelkreisläufen (anders ausgedrückt Wasserkreisläufen) des Wasserkreislaufsystems zuführen. Dabei kann die Steuerungseinheit die Bewässerungsvorrichtung derart ansteuern, dass das Wasser einem Einzelkreislauf bzw. einem Wasserkreislauf für jede Bewässerungswanne zugeführt wird.

Das Verfahren zur Aufzucht von Pflanzen kann ferner Ermitteln einer Wassertemperatur mittels eines Temperatursensors aufweisen, wobei der Temperatursensor optional ein NTC-Thermistor ist.

Des Weiteren kann das Verfahren ein Filtern des Wassers in dem Wasserkreislaufsystem derart, dass Pflanzenreste und/oder Nährstoffablagerungen in dem Wasserkreislaufsystem aufgefangen werden, aufweisen.

Das Verfahren kann in weiteren verschiedenen Ausführungsbeispielen ferner ein Reinigen des Wassers mittels einer Vorrichtung in der Bewässerungsvorrichtung aufweisen. Dabei kann die Vorrichtung zum Reinigen des Wassers das Wasser mittels Bestrahlens mit Licht im UV-C-Bereich reinigen. Die Steuerungseinheit kann beispielsweise die Bewässerungsvorrichtung derart ansteuern, dass das Wasser einem Einzelkreislauf für jede Bewässerungswanne und/oder einem Einzelkreislauf (anders ausgedrückt einem Wasserkreislauf) zum Reinigen des Wassers zugeführt wird. Eine Vorrichtung zum Reinigen des Wassers wird unter Bezugnahme auf Fig.9A und Fig.9B genauer beschrieben werden.

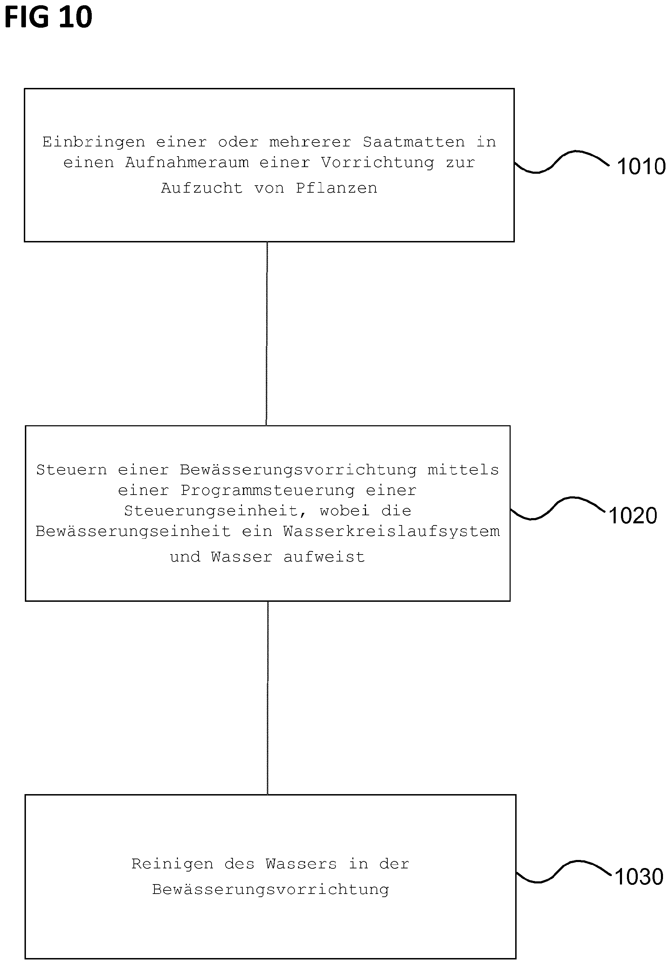

Ein Verfahren zum Reinigen des Wassers wird unter Bezugnahme auf Fig.10 genauer beschrieben werden.

Fig.5B zeigt ein Ablaufdiagramm des Zuführens von Wasser zu und des Ablassens von Wasser aus den Bewässerungswannen mittels der Bewässerungsvorrichtung eines Verfahrens zur Aufzucht von Pflanzen gemäß verschiedenen Ausführungsbeispielen.

Wie in Fig.5B dargestellt, wird die mindestens eine Bewässerungswanne in verschiedenen Ausführungsbeispielen mit Wasser vollständig befüllt, 560. Danach kann das Wasser aus der mindestens einen Bewässerungswanne in verschiedenen Ausführungsbeispielen vollständig ablaufen, 570, bevor die mindestens eine Bewässerungswanne in verschiedenen Ausführungsbeispielen nach Ablauf eines vorher festgelegten Zeitintervalls neuerlich vollständig befüllt wird, 580.

Beispielsweise wird den Bewässerungswannen in verschiedenen Ausführungsbeispielen in dem Verfahren zur Aufzucht von Pflanzen mittels der Bewässerungsvorrichtung Wasser zugeführt. Beispielsweise wird, wie oben beschrieben, den Bewässerungswannen in regelmäßigen Intervallen Wasser zugeführt. Unter Bezugnahme auf Fig.5B und Fig. 4 kann die Steuerungseinheit 60 (nicht dargestellt) beispielsweise das Wasserkreislaufsystem 410 derart ansteuern, dass Wasser aus dem Wassertank (nicht dargestellt) mittels der Wasserkreislaufpumpe 414 durch den ersten Einzelkreislauf 420 hindurch der ersten Bewässerungswanne 421 zugeführt wird. Ebenso kann die Steuerungseinheit 60 beispielsweise das Wasserkreislaufsystem 410 derart ansteuern, dass Wasser aus dem Wassertank mittels der Wasserkreislaufpumpe 414 durch den zweiten Einzelkreislauf 430 hindurch der zweiten Bewässerungswanne 431 zugeführt wird.

Beispielsweise kann die Steuerungseinheit die Bewässerungsvorrichtung derart ansteuern, dass zu einem ersten Zeitpunkt Wasser einer ersten Bewässerungswanne 421 zugeführt wird und zu einem zweiten Zeitpunkt Wasser einer zweiten Bewässerungswanne 431 zugeführt wird. Dabei kann der erste Zeitpunkt von dem zweiten Zeitpunkt verschieden sein. Alternativ dazu können die beiden Bewässerungswannen 421, 431 gleichzeitig befüllt werden.

Außerdem kann die Steuerungseinheit 60 die Wasserkreislaufpumpe 414 beispielsweise derart ansteuern, dass die jeweilige Bewässerungswanne 421, 431 komplett befüllt wird. Dies kann dadurch erzielt werden, dass die Wasserkreislaufpumpe 414 Wasser im Überschuss zu der jeweiligen Bewässerungswanne 421, 431 pumpt. Mittels der an jeder der Bewässerungswannen befindlichen Überlaufeinkerbung (siehe bspw. die erste Überlaufeinkerbung 423 an der ersten Bewässerungswanne 421 der Fig.4) kann überschüssiges Wasser kontrolliert ablaufen. Dazu kann die jeweilige Überlaufeinkerbung an einer Rückseite der jeweiligen Bewässerungswanne 421, 431 angeordnet sein, so dass das überschüssige Wasser an einer inneren Rückseitenwand (nicht dargestellt) der Vorrichtung zur Aufzucht von Pflanzen zurück zu dem Wassertank fließen kann.

Dabei können beim vollständigen Füllen der Bewässerungswannen 422, 432 die Wurzeln der Pflanzen (nicht dargestellt), die über mindestens einer der Bewässerungswannen 421, 431 angeordnet sind und aus dem auf den Saatmatten (nicht dargestellt) aufgebrachten Saatgut (nicht dargestellt) wachsen, derart in das Wasser eintauchen, dass sie vollständig nass werden.

Genauer ausgedrückt kann die Steuerungseinheit 60 in verschiedenen Ausführungsbeispielen die Wasserkreislaufpumpe 414 derart ansteuern, dass die jeweilige Bewässerungswanne 421, 431 in Abhängigkeit von einem Zustand des auf den Saatmatten befindlichen Saatguts bzw. von einem Zustand der auf den Saatmatten wachsenden Pflanzen unterschiedlich hoch befüllt wird. Beispielsweise kann die Steuerungseinheit 60 in dem Fall, dass das Saatgut auf den Saatmatten noch keine Wurzeln entwickelt hat, die jeweilige Bewässerungswanne 421, 431 so weit befüllen lassen, dass ein Wasserpegel die Saatmatte derart benetzt, dass das Saatgut auf den Saatmatten weiter quellen und beispielsweise Wurzeln bilden kann. Andererseits kann die Steuerungseinheit 60 in dem Fall, dass das Saatgut auf den Saatmatten bereits Wurzeln entwickelt hat, die jeweilige Bewässerungswanne 421, 431 so weit befüllen lassen, dass ein Wasserpegel die Wurzeln der Pflanzen erreicht, der Wasserpegel die Saatmatten jedoch nicht benetzt, derart, dass die Saatmatten in diesem Zustand der Pflanzen möglichst trocken bleiben, so dass Schimmelbildung in den Saatmatten verhindert werden kann

Nach dem vollständigen Befüllen der Bewässerungswannen 421, 431 kann das in den Bewässerungswannen 421, 431 befindliche Wasser mittels des ersten Ablaufs 424 bzw. mittels des zweiten Ablaufs (nicht dargestellt) aus den Bewässerungswannen 421, 431 ablaufen (570). Dabei sind der erste Ablauf 424 und der zweite Ablauf ebenfalls an der Rückseite der jeweiligen Bewässerungswanne 421, 431 angeordnet, so dass das Wasser entlang der inneren Rückseitenwand der Vorrichtung zur Aufzucht von Pflanzen vollständig ablaufen kann.

Durch das vollständige Befüllen der Bewässerungswannen 421, 431 (560), das darauffolgende vollständige Ablaufen des Wassers aus den Bewässerungswannen 421, 431 (570) und die Intervalle zwischen dem Ablaufen des Wassers und dem darauffolgenden neuerlichen Befüllen (580) kann gewährleistet werden, dass die Wurzeln der Pflanzen bei jedem Befüllen vollständig durchnässt werden, in dem Intervall zwischen zwei Befüllungen die Wurzeln jedoch nicht ins Wasser ragen, derart, dass genügend Sauerstoff an die Wurzeln gelangen kann. Das aus den Bewässerungswannen 421, 431 ablaufende Wasser kann in dem Wassertank wieder aufgefangen werden. Anders ausgedrückt verbleibt das aus den Bewässerungswannen 421, 431 ablaufende Wasser in dem Wasserkreislaufsystem 410.

Die Steuerungseinheit 60 (siehe Fig.1) kann dabei die Bewässerungsvorrichtung 20 derart ansteuern, dass den Bewässerungswannen 421, 431 in vorher festgelegten Intervallen Wasser zugeführt wird. Ein zeitlicher Abstand zwischen zwei vollständigen Befüllungen der Bewässerungswannen 421, 431 (560, 580) kann beispielsweise in einem Bereich von ungefähr 10 min bis ungefähr 60 min, optional von ungefähr 15 min bis ungefähr 50 min, optional von ungefähr 20 min bis ungefähr 40 min liegen. Anders ausgedrückt kann ein Intervall eine Zeitdauer beispielsweise in einem Bereich von ungefähr 10 min bis ungefähr 60 min, optional von ungefähr 15 min bis ungefähr 50 min, optional von ungefähr 20 min bis ungefähr 40 min aufweisen.

Die Steuerungseinheit 60 kann die Bewässerungseinheit 20 derart steuern, dass die Intervalle zwischen den Befüllungen der Bewässerungswannen 421, 431 auf das auf den Saatmatten aufgebrachte Saatgut und/oder den Wachstumsfortschritt der auf den Saatmatten wachsenden Pflanzen abgestimmt ist. Beispielsweise kann die Steuerungseinheit die Zeitdauer zwischen zwei Befüllungen der Bewässerungswannen 421, 431 auf das jeweilige Saatgut und/oder den Zustand der Pflanzen, die in den Aufnahmeraum 12 eingebracht wurden, abstimmen. Dazu kann, wie oben bereits beschrieben, das Verfahren Aufnehmen von Bildern der in dem Aufnahmeraum aufgenommenen Saatmatten und der aus dem Saatgut entstehenden Pflanzen mittels einer Kamera aufweisen. In verschiedenen Ausführungsbeispielen kann das Zuführen von Wasser zu den Saatmatten ferner Weiterleiten von Signalen von der Kamera zur Programmsteuerung, Vergleichen der mittels der Kamera aufgenommenen Bilder mit einem oder mehreren in einem Mustererkennungsspeicher der Steuerungseinheit gespeicherten Referenzbildern zum Ermitteln eines Zustands der in dem Aufnahmeraum aufgenommenen Pflanzen mittels einer Mustererkennungsvorrichtung der Steuerungseinheit, und Anpassen der Programmsteuerung an die jeweilige Pflanze und ihren Zustand aufweisen.

Fig.6 zeigt einen Ausschnitt des Wasserkreislaufsystems mit einer Vorrichtung zum Zuführen von Nährstoffen gemäß verschiedenen Ausführungsbeispielen.

In Fig.6 sind der Einfachheit halber nicht alle Elemente des Wasserkreislaufsystems 610 dargestellt. Neben Leitungen 611, einer Wasserkreislaufpumpe 614, einem (Verteiler-)Ventil 615 und einem Sensor 616 weist das Wasserkreislaufsystem 610 weitere Elemente auf, wie sie unter Bezugnahme auf Fig.3 und Fig.4 bereits beschrieben sind. Des Weiteren weist das Wasserkreislaufsystem 610 der Bewässerungsvorrichtung 20, wie in Fig.6 dargestellt, eine Vorrichtung zum Zuführen von Nährstoffen 650 auf.

Wie in Fig.6 dargestellt, weist das Wasserkreislaufsystem 610 die Vorrichtung zum Zuführen von Nährstoffen 650 auf. Die Vorrichtung zum Zuführen von Nährstoffen 650 kann dazu eingerichtet sein, dem Wasser, das den Bewässerungswannen (nicht dargestellt) zugeführt wird, Nährstoffe und/oder Salze zuzuführen. Beispielsweise kann die Vorrichtung zum Zuführen von Nährstoffen 650 eingerichtet sein, dem Wasser mineralische und/oder organische Nährstoffe, wie beispielsweise mineralischer und/oder organischer Dünger, und/oder Säuren und/oder Basen, zuzuführen.

Wie weiter in Fig.6 dargestellt, kann dafür das Wasserkreislaufsystem 610 gemäß verschiedenen Ausführungsbeispielen eine oder mehrere Pumpen 651, 652 aufweisen, die vorzugsweise als peristaltische Pumpen 651, 652 ausgebildet sein können. Dabei kann jede der Pumpen 651, 652 derart mit einem jeweiligen Vorratsbehälter 661, 662 gekoppelt sein, dass die jeweilige Pumpe 651, 652 dem in dem Wasserkreislaufsystem 610 umgepumpten Wasser eine in dem entsprechenden Vorratsbehälter 661, 662 bevorratete Flüssigkeit zugeben kann.

Beispielsweise kann eine erste Pumpe 651 mit einem ersten Vorratsbehälter 661 verbunden sein, in dem eine Nährstofflösung, vorzugsweise ein mineralischer und/oder organischer Dünger, bevorratet sein kann. Beispielsweise kann die erste Pumpe 651 mit dem ersten Vorratsbehälter 661 verbunden sein, in dem der mineralische Dünger bevorratet sein kann, oder die erste Pumpe 651 kann mit dem ersten Vorratsbehälter 661 verbunden sein, in dem der organische Dünger bevorratet sein kann. Alternativ kann die Vorrichtung zum Zuführen von Nährstoffen 650 zwei Pumpen 651, 652 und zwei Vorratsbehälter 661, 662 aufweisen, wobei beispielsweise der Vorratsbehälter 661 mineralischen Dünger bevorratet und der Vorratsbehälter 662 organischen Dünger bevorratet.

Außerdem kann die zweite Pumpe 652 mit dem zweiten Vorratsbehälter 662 verbunden sein, wobei in dem zweiten Vorratsbehälter 662 eine Säure und/oder Base bevorratet sein kann. Alternativ dazu kann die zweite Pumpe 652, die mit dem zweiten Vorratsbehälter 662 gekoppelt ist, und eine dritte Pumpe (nicht dargestellt), die mit einem dritten Vorratsbehälter (nicht dargestellt) verbunden ist, aufweisen, wobei in dem zweiten Vorratsbehälter 662 eine Säure bevorratet sein kann und in dem dritten Vorratsbehälter eine Base bevorratet sein kann. Als weitere Alternative kann die erste Pumpe 651 mit dem ersten Vorratsbehälter 661 verbunden sein, in dem der mineralische Dünger bevorratet sein kann, die zweite Pumpe 652 kann mit dem zweiten Vorratsbehälter 662 verbunden sein, in dem der organische Dünger bevorratet sein kann, die dritte Pumpe kann mit dem dritten Vorratsbehälter verbunden sein, in dem die Säure bevorratet sein kann, und eine vierte Pumpe kann mit einem vierten Vorratsbehälter verbunden sein, in dem die Base bevorratet sein kann.

Die Steuerungseinheit 60 (siehe Fig.1) kann dazu eingerichtet sein, die Pumpen 651, 652 der Vorrichtung zum Zuführen von Nährstoffen 650 derart zu steuern, dass dem Wasser in dem Wasserkreislaufsystem 610 Nährstoffe aus den Vorratsbehältern 661, 662 zugeführt werden. Die Vorratsbehälter 661, 662 können hierbei, wie oben beschrieben, als Nährstoffe mineralischen Dünger und/oder organischen Dünger und/oder Säure und/oder Base aufweisen. Dafür können die Vorratsbehälter 661, 662 derart mit dem Wasserkreislaufsystem 610 verbunden sein, dass die in den Vorratsbehältern 661, 662 bevorrateten Nährstoffe mittels der Steuerungseinheit dem in dem Wasserkreislaufsystem 610 befindlichen Wasser zugeführt werden. Wie in Fig.3 dargestellt, können die Vorratsbehälter beispielsweise mit dem Wassertank verbunden sein. Alternativ dazu können, wie in Fig.6 dargestellt, die Vorratsbehälter 661, 662 mit der Wasserkreislaufpumpe 614 und/oder Abschnitten von Leitungen 611 des Wasserkreislaufsystems 610 verbunden sein.

Beispielsweise kann die Steuerungseinheit 60 entsprechend dazu eingerichtet sein, die Pumpen 651, 652, beispielsweise die erste Pumpe 651 und die zweiten Pumpe 652, derart zu steuern, dass dem Wasser in dem ersten Wasserkreislauf 420 (siehe Fig.4) und dem zweiten Wasserkreislauf 430 bestimmte Mengen an mineralischem und/oder organischen Dünger und/oder Säure und/oder Base aus den jeweiligen Vorratsbehältern 661, 662, beispielsweise dem ersten Vorratsbehälter 661 und dem zweiten Vorratsbehälter 662, zugesetzt wird.

In verschiedenen Ausführungsbeispielen kann die Steuerungseinheit 60 (nicht dargestellt) ferner dazu eingerichtet sein, Messwerte von dem Sensor 616 zu empfangen. Beispielsweise kann die Steuerungseinheit 60 Daten von dem Sensor 616 zum Ermitteln eines Leitwerts des Wassers zu empfangen. Außerdem kann die Steuerungseinheit dazu eingerichtet sein, einen Nährstoffgehalt des Wassers auf der Basis des Leitwertes des Wassers zu regeln. Anders ausgedrückt kann die Steuerungseinheit 60 dazu eingerichtet sein, den Nährstoffgehalt des Wassers auf der Basis der von dem Sensor 616 empfangenen Messwerte zu regeln. Beispielsweise kann die Steuerungseinheit 60 dazu eingerichtet sein, die Pumpen 651, 652 auf Basis der für den Leitwert des Wassers ermittelten Messwerte derart anzusteuern, dass diese mineralischen Dünger und/oder organischen Dünger und/oder Säure und/oder Base aus den jeweiligen Vorratsbehältern 561, 562 in das Wasserkreislaufsystem 610 abgeben.

Zusätzlich kann die Steuerungseinheit 60 dazu eingerichtet sein, eine Regelgröße für den Nährstoffgehalt auf der Basis der in den Aufnahmeraum 12 eingebrachten Pflanzen und/oder ihres Zustands festzulegen. Dazu kann die Vorrichtung zur Aufzucht von Pflanzen (siehe Fig.1), die die Bewässerungsvorrichtung 20 mit der Vorrichtung zum Zuführen von Nährstoffen 650 aufweist, des Weiteren eine Kamera (nicht dargestellt) zum Aufnehmen von Bildern der in dem Aufnahmeraum aufgenommenen Saatmatten (nicht dargestellt) und der aus dem Saatgut entstehenden Pflanzen (nicht dargestellt) aufweisen.

Ferner kann die Steuerungseinheit eine Mustererkennungsvorrichtung (nicht dargestellt) und einen zugehörigen Mustererkennungsspeicher (nicht dargestellt) aufweisen und dazu eingerichtet sein, Signale von der Kamera zur Programmsteuerung (nicht dargestellt) weiterzuleiten. Außerdem kann die Steuerungseinheit 60 dazu eingerichtet sein, mittels der Mustererkennungsvorrichtung die mittels der Kamera aufgenommenen Bilder mit einem oder mehreren in dem Mustererkennungsspeicher gespeicherten Referenzbildern zu vergleichen zum Ermitteln eines Zustands der in dem Aufnahmeraum aufgenommenen Pflanzen, um somit die Programmsteuerung auf die jeweilige Pflanze und ihren Zustand anzupassen. Anders ausgedrückt kann die Steuerungseinheit dazu eingerichtet sein, die Vorrichtung zum Zuführen von Nährstoffen derart ansteuern, dass eine Zusammensetzung des Wassers, das den Bewässerungswannen zugeführt wird, auf das jeweilige Saatgut und/oder den Zustand der aus dem Saatgut entstehenden Pflanzen abgestimmt ist.

In weiteren Ausführungsformen kann die Bewässerungsvorrichtung des Weiteren eine Möglichkeit bereitstellen, beispielsweise unterschiedlichen Pflanzensorten, die zeitgleich in verschiedenen Aufzuchteinheiten in dem Aufnahmeraum wachsen, für ein optimales Wachstum Wasser unterschiedlicher Zusammensetzung zuzuführen, beispielsweise mittels der zusätzlichen Leitung 312. Andererseits kann in der Vorrichtung zur Aufzucht von Pflanzen auch eine zweite Bewässerungsvorrichtung vorgesehen sein, die ähnlich der hier beschriebenen Bewässerungsvorrichtung ausgestattet ist, wobei mittels der beiden Bewässerungsvorrichtungen verschiedenen Pflanzensorten, die zeitgleich in verschiedenen Aufzuchteinheiten in dem Aufnahmeraum keimen und/oder wachsen, für ein optimales Wachstum Wasser unterschiedlicher Zusammensetzung zugeführt wird.

Ebenso kann mittels vorliegender Bewässerungsvorrichtung eine Möglichkeit bereitgestellt werden, den einzelnen Bewässerungswannen beispielsweise im Verlaufe des Pflanzenwachstums von der Keimung des Saatguts bis hin zum Tragen und Reifen eventuell vorhandener Früchte Wasser unterschiedlicher Zusammensetzung zuzuführen. Beispielsweise kann eine Möglichkeit bereitgestellt werden, mittels der vorliegenden Bewässerungsvorrichtung bestimmten Pflanzen zu einem bestimmten Zeitpunkt des Wachstums eher mineralischen Dünger in saurem Milieu zuzuführen, während zu einem anderen Zeitpunkt beispielsweise ein organischer Dünger in basischem Milieu zugeführt werden kann.

Fig.7 zeigt eine Überblicksdarstellung der Bewässerungsvorrichtung mit der Vorrichtung zum Zuführen von Nährstoffen gemäß verschiedenen Ausführungsbeispielen. In der Überblicksdarstellung der Bewässerungsvorrichtung wird die Anordnung der einzelnen Elemente des Wasserkreislaufsystems in der Vorrichtung zur Aufzucht von Pflanzen dargestellt.

Wie in Fig.7 dargestellt, weist das Wasserkreislaufsystem 710 in verschiedenen Ausführungsbeispielen Leitungen 711, eine Wasserkreislaufpumpe 714, einen Sensor 716, ein (Verteiler-) Ventil 715, einen ersten Einzelkreislauf 720, einen zweiten Einzelkreislauf 730, einen dritten Einzelkreislauf 740 und eine Vorrichtung zum Zuführen von Nährstoffen 750 auf. Dabei kann der erste Einzelkreislauf 720 (anders ausgedrückt der erste Wasserkreislauf 720) eine erste Bewässerungswanne 721 aufweisen, der zweite Einzelkreislauf 730 (anders ausgedrückt der zweite Wasserkreislauf 730) kann eine zweite Bewässerungswanne 731 aufweisen, und der dritte Einzelkreislauf 740 (anders ausgedrückt der dritte Wasserkreislauf 740) kann eine Vorrichtung zum Reinigen von Wasser 741 aufweisen.

Des Weiteren kann die Vorrichtung zum Zuführen von Nährstoffen 750 eine erste Pumpe 751, eine zweite Pumpe 752, einen ersten Vorratsbehälter 761 und einen zweiten Vorratsbehälter 762 aufweisen.

Wie unter Bezugnahme auf Fig.4 beschrieben wurde, kann das Wasserkreislaufsystem 710 ferner mindestens einen Filter (nicht dargestellt) aufweisen, der eingerichtet ist, Pflanzenreste und/oder Nährstoffablagerungen in dem Wasserkreislaufsystem aufzufangen. Beispielsweise kann ein Filter des Wasserkreislaufsystems 710 vor einem Ansaugstück (nicht dargestellt) der Wasserkreislaufpumpe 714 in dem Wassertank (nicht dargestellt) angeordnet sein, und weitere Filter (nicht dargestellt) können in den Leitungen 711 jeweils zwischen den Vorratsbehältern 761, 762 und den entsprechenden Pumpen 751, 752 angeordnet sein.

Das Wasserkreislaufsystem 710 kann dazu eingerichtet sein, den auf den Bewässerungswannen 721, 731 angeordneten Saatmatten (nicht dargestellt) Wasser zuzuführen, wie es oben unter Bezugnahme auf Fig.3, Fig.4 und Fig.6 ausführlich beschrieben ist. Ebenso kann das Verfahren zur Aufzucht von Pflanzen, wie es unter Bezugnahme auf Fig.5A und Fig.5B ausführlich beschrieben ist, mittels des Wasserkreislaufsystems 710 durchgeführt werden. Deshalb wird hier auf eine ausführliche Beschreibung der Vorrichtung zur Aufzucht von Pflanzen, die eine Bewässerungsvorrichtung mit dem Wasserkreislaufsystem 710 aufweist, und auf eine ausführliche Beschreibung des Verfahrens zur Aufzucht von Pflanzen mittels des Wasserkreislaufsystems 710 verzichtet.

Fig.8 zeigt eine schematische Darstellung eines Sensors zum Ermitteln eines Leitwerts des Wassers in dem Wasserkreislaufsystem gemäß verschiedenen Ausführungsbeispielen.

Wie in Fig.8 dargestellt, kann der Sensor 816 zum Ermitteln des Leitwerts des Wassers in dem Wasserkreislaufsystem gemäß verschiedenen Ausführungsbeispielen mindestens eines bestehend aus einem Spannungsgenerator 820, einer Schaltung 830, einer Sensorschaltung 850, einer Verstärkerschaltung 860 und einem Gleichrichter 870 aufweisen.

Der Spannungsgenerator 820 kann beispielsweise einen negativen Spannungsgenerator bzw. Gleichspannungs-Gleichspannungs-Wandler, vorzugsweise einen Ladungspumpen-Spannungswandler mit variabler Schaltfrequenz (charge-pumpvoltage-inverter with variable switching frequency), aufweisen. Der Spannungsgenerator 820 kann beispielsweise eine Gleichspannungsversorgung umfassen und vorgesehen sein, die Schaltung 830 mit einer negativen Gleichspannung versorgen zu können.

In verschiedenen Ausführungsbeispielen kann die Schaltung 830 eine Schaltung zum Erzeugen einer Wechselspannung, beispielsweise eine Sinus-Wellengenerator-Schaltung bzw. eine Dioden-stabilisierte Wien-Robinson-Oszillator-Schaltung, aufweisen. Die Schaltung 830 kann ferner beispielsweise einen Verstärker aufweisen.

Der Sensor 816 kann in verschiedenen Ausführungsbeispielen die Sensorschaltung 850 aufweisen. Die Sensorschaltung 850 kann beispielsweise einen Verstärker, beispielsweise einen nichtinvertierenden Verstärker bzw. einen Subtrahierer bzw. Differenzverstärker, aufweisen.

Die Verstärkerschaltung 860 des Sensors 816 kann beispielsweise eine nichtinvertierende Verstärkerschaltung bzw. einen Spannungsfolger bzw. einen Pufferverstärker aufweisen. Der Gleichrichter 870 kann beispielsweise einen Wechselspannungs- zu Gleichspannungswandler, beispielsweise einen Spitzenwertgleichrichter, aufweisen.

Der Sensor 816 kann ferner eine Temperaturmessschaltung (nicht dargestellt), beispielsweise eine negative TemperaturKoeffizient-Schaltung (NTC-Schaltung), vorzugsweise einen NTC-Widerstand bzw. NTC-Thermistor bzw. Heißleiter, aufweisen. Der Sensor 816 kann somit dazu eingerichtet sein, eine Kompensierung des Einflusses der Temperatur auf ein Messsignal der Sensorschaltung 850 unter Verwendung eines Messsignals der Temperaturmessschaltung vorzunehmen. Anders ausgedrückt kann der Sensor 816 dazu eingerichtet sein, basierend auf dem Messsignal der Temperaturmessschaltung eine Temperaturkompensation des Messsignals der Sensorschaltung 850 vorzunehmen. Wiederum anders ausgedrückt kann in verschiedenen Ausführungsbeispielen mittels der Temperaturmessschaltung ein Ausgangssignal des Sensors 816 temperaturkompensiert werden, indem Temperatureinflüsse durch Berechnung aus dem Ausgangssignal des Sensors 816 herausgerechnet werden können.

In verschiedenen Ausführungsbeispielen kann der Sensor 816 beispielsweise als konduktiver Leitfähigkeitssensor ausgeführt sein und kann ferner dazu eingerichtet sein, eine Widerstandsänderung zwischen zwei Elektroden in einem Behälter auch zur Bestimmung eines Füllstands eines sich in dem Behälter befindenden Mediums, beispielsweise einer Flüssigkeit oder eines Flüssigkeitsstoffgemisches, in einem Behälter zu ermitteln.

Alternativ kann in verschiedenen Ausführungsbeispielen der Sensor 816 beispielsweise als kapazitiver Leitfähigkeitssensor ausgeführt sein und kann dazu eingerichtet sein, eine durch eine Änderung des Füllstands einer Flüssigkeit hervorgerufene Kapazitätsänderung zu realisieren. Ferner kann der Sensor 816 als kombinierter kapazitiver Sensor ausgeführt sein und kann dazu eingerichtet sein, sowohl die Leitfähigkeit der Flüssigkeit als auch eine durch eine Änderung des Füllstands der Flüssigkeit hervorgerufene Kapazitätsänderung zu ermitteln. Beispielsweise kann ein stabförmiger Leitfähigkeitssensor, der beispielsweise senkrecht zur Flüssigkeitsoberfläche eingebaut sein kann, dazu eingerichtet sein, sowohl die Leitfähigkeit der Flüssigkeit als auch den Füllstand der Flüssigkeit zu ermitteln.

Als weitere Alternative kann die Sensorschaltung dazu eingerichtet sein, die Leitfähigkeit der Flüssigkeit und den Füllstand der Flüssigkeit in dem Behälter kontaktlos zu ermitteln.

Fig.9A zeigt eine Darstellung einer Vorrichtung zum Reinigen des Wassers der Bewässerungsvorrichtung gemäß verschiedenen Ausführungsbeispielen. Fig.9B zeigt eine Querschnittansicht der Vorrichtung zum Reinigen des Wassers der Bewässerungsvorrichtung gemäß verschiedenen Ausführungsbeispielen.

Wie in Fig.9A dargestellt, kann die Vorrichtung zum Reinigen des Wassers 941 der Bewässerungsvorrichtung der Vorrichtung zur Aufzucht von Pflanzen eine Reinigungsröhre 945, einen Zuführungsanschluss 942, einen Abflussanschluss 943 und eine Leuchtmittelfassung 950 aufweisen. Die Leuchtmittelfassung 950 kann Anschlussdrähte 951 zum Anschließen der Leuchtmittelfassung an eine Stromversorgung (nicht dargestellt) aufweisen. Der Zuführungsanschluss 942 und der Abflussanschluss 943 können dazu eingerichtet sein, mit Schläuchen 944 und/oder Röhren 944 der Bewässerungsvorrichtung der Vorrichtung zur Aufzucht von Pflanzen verbunden zu sein, wie unter Bezugnahme auf Fig.4 und Fig.7 bereits beschrieben. Die Bewässerungsvorrichtung der Vorrichtung zur Aufzucht von Pflanzen kann dazu eingerichtet sein, der Reinigungsröhre 945 der Vorrichtung zum Reinigen des Wassers 941 mittels des wie unter Bezugnahme auf Fig.4 und Fig.7 beschriebenen Einzelkreislaufs 440 bzw. 740 Wasser zuzuführen. Beispielsweise kann die Bewässerungsvorrichtung dazu eingerichtet sein, der Reinigungsröhre 945 Wasser aus dem Wasserkreislaufsystem mittels eines Schlauchs 944a und des Zuführungsanschlusses 942 zuzuführen und das Wasser mittels des Abflussanschlusses 943 und eines Schlauchs 944b wieder aus der Reinigungsröhre 945 abzuleiten und zu der Bewässerungsvorrichtung zurück zu leiten.

Wie in der Querschnittansicht der Vorrichtung zum Reinigen des Wassers 941 der Fig.9B dargestellt, kann die Reinigungsröhre 945 eine äußere Röhre 946 und eine innere Röhre 947 aufweisen, die konzentrisch angeordnet sind. Anders ausgedrückt besteht die Reinigungsröhre 945 aus der äußeren Röhre 946 und der inneren Röhre 947. Die äußere Röhre 946 und die innere Röhre 947 können derart angeordnet sein, dass ein Zwischenraum 948 in der Reinigungsröhre 945 ausgebildet ist. Dabei ist ein Zwischenraum 948 zwischen der äußeren Röhre 946 und der inneren Röhre 947 dazu eingerichtet, Wasser zwischen der äußeren Röhre 946 und der inneren Röhre 947 hindurch zu leiten (Pfeile 949). Dabei ist die Vorrichtung zum Reinigen des Wassers 941 dazu eingerichtet, das Wasser dem Zwischenraum 948 mittels des Schlauchs 944a und des Zuführungsanschlusses 942 zuzuführen und mittels des Abflussanschlusses 943 und des Schlauchs 944b wieder zu der Bewässerungsvorrichtung zurück zu leiten.

Die innere Röhre 947 der Reinigungsröhre 945 kann ferner dazu eingerichtet sein, ein Leuchtmittel 952 aufzunehmen, das mit der Leuchtmittelfassung 950 verbunden ist, wobei die Leuchtmittelfassung 950 mit der Reinigungsröhre 945 verbunden sein kann. Dabei kann die Leuchtmittelfassung 950 derart mit der Reinigungsröhre 945 verbunden sein, dass das Leuchtmittel 952 konzentrisch mit der äußeren Röhre 946 und der inneren Röhre 947 in der inneren Röhre 947 angeordnet ist. Die Leuchtmittelfassung kann dazu eingerichtet sein, dem Leuchtmittel 952 mittels der Anschlussdrähte 951 Strom von der Stromversorgung (nicht dargestellt) zuzuführen.

Die äußere Röhre 946 kann aus einem UV-beständigen Material, wie beispielsweise Glas, Metall oder Kunststoff, oder einem anderen geeigneten Material gebildet sein. Die äußere Röhre 946 kann des Weiteren eine Schutzschicht (nicht dargestellt), beispielsweise eine Außenbeschichtung (nicht dargestellt) aufweisen. Die Außenbeschichtung kann aus beispielsweise UVstabilem Lack oder UV-stabiler Folie gebildet sein.

Die äußere Röhre 946 kann einen Durchmesser in einem Bereich von ungefähr 40 mm bis ungefähr 50 mm, beispielsweise in einem Bereich von ungefähr 42 mm bis ungefähr 48 mm, beispielsweise in einem Bereich von ungefähr 44 mm bis ungefähr 46 mm aufweisen. Die äußere Röhre 946 kann ferner eine Länge in einem Bereich von ungefähr 170 mm bis ungefähr 250 mm, beispielsweise in einem Bereich von ungefähr 190 mm bis ungefähr 220 mm, beispielsweise in einem Bereich von ungefähr 200 mm bis ungefähr 210 mm aufweisen.

Die innere Röhre 947 kann aus einem UV-durchlässigen Material, wie beispielsweise UV-durchlässiges Glas oder UVdurchlässiger Kunststoff, , oder einem anderen geeigneten Material gebildet sein. Beispielsweise kann die innere Röhre 947 aus UV-durchlässigem Quarzglas gebildet sein.

Die innere Röhre 947 kann einen Durchmesser in einem Bereich von ungefähr 25 mm bis ungefähr 40 mm, beispielsweise in einem Bereich von ungefähr 30 mm bis ungefähr 35 mm, beispielsweise in einem Bereich von ungefähr 32 mm bis ungefähr 33 mm aufweisen. Die innere Röhre 947 kann ferner eine Länge in einem Bereich von ungefähr 170 mm bis ungefähr 250 mm, beispielsweise in einem Bereich von ungefähr 190 mm bis ungefähr 220 mm, beispielsweise in einem Bereich von ungefähr 200 mm bis ungefähr 210 mm aufweisen. Die innere Röhre 947 kann dieselbe Länge aufweisen wie die äußere Röhre 946.

Der Zwischenraum 948 zwischen der äußeren Röhre 946 und der inneren Röhre 947 kann somit eine Weite in einem Bereich von ungefähr 1 mm bis ungefähr 15 mm, beispielsweise in einem Bereich von ungefähr 3 mm bis ungefähr 8 mm, beispielsweise in einem Bereich von ungefähr 5 mm bis ungefähr 7 mm aufweisen. Daraus ergibt sich, dass der Zwischenraum 948 ein Durchflussvolumen in einem Bereich von ungefähr 0,1 l bis ungefähr 0,2 l, beispielsweise in einem Bereich von ungefähr 0,13 l bis ungefähr 0,16 l, beispielsweise in einem Bereich von ungefähr 0,14 l bis ungefähr 0,15 l aufweist. Die Reinigungsröhre 945 kann dazu eingerichtet sein, dass Wasser in dem entsprechenden Einzelkreislauf (bspw. Einzelkreislauf 440 der Fig.4 und Einzelkreislauf 740 der Fig.7) des Wasserkreislaufsystems (nicht dargestellt) der Bewässerungsvorrichtung (nicht dargestellt) durch den Zwischenraum 948 zwischen der äußeren Röhre 946 und der inneren Röhre 947 hindurch gepumpt wird (siehe Pfeile 949).

Das Leuchtmittel 952 kann dazu eingerichtet sein, innerhalb der inneren Röhre 947 angeordnet zu sein. Dazu kann das Leuchtmittel 952 einen Außendurchmesser und eine Länge aufweisen, die in einem Bereich liegen, dass das Leuchtmittel 952 beispielsweise in die innere Röhre 947 eingeschoben sein kann. Das Leuchtmittel 952 kann dabei eine kürzere Länge aufweisen als die äußere Röhre 946 und die innere Röhre 947.

Dabei kann das Leuchtmittel 952 derart in der inneren Röhre 947 angeordnet sein, dass zwischen der Innenwand der inneren Röhre 947 und dem Leuchtmittel 952 ein Spalt 953 verbleibt. Der Spalt 953 kann dabei eine durchschnittliche Weite in einem Bereich von ungefähr 0,3 mm bis ungefähr 5 mm, beispielsweise in einem Bereich von ungefähr 0,4 mm bis ungefähr 2,5 mm, beispielsweise in einem Bereich von ungefähr 0,5 mm bis ungefähr 1 mm aufweisen.

Das Leuchtmittel 952 kann eine UV-Lampe 952 sein. Anders ausgedrückt kann das Leuchtmittel 952 dazu eingerichtet sein, Licht in einem UV-Wellenlängenbereich des Spektrums abzustrahlen. Das Leuchtmittel 952 kann insbesondere dazu eingerichtet sein, Licht in einem UV-C-Wellenlängenbereich abzustrahlen. Beispielsweise kann das Leuchtmittel 952 dazu eingerichtet sein, Licht in einem Wellenlängenbereich von ungefähr 200 mm bis ungefähr 280 mm, beispielsweise in einem Bereich von ungefähr 230 nm bis ungefähr 260 nm, beispielsweise in einem Bereich von ungefähr 250 nm bis ungefähr 255 nm abzustrahlen.

Das Leuchtmittel 952 kann eine Leistung in einem Bereich von ungefähr 5 W bis ungefähr 20 W, beispielsweise in einem Bereich von ungefähr 7 W bis ungefähr 15 W, beispielsweise in einem Bereich von ungefähr 10 W bis ungefähr 11 W aufweisen. Dabei kann das Leuchtmittel 952 eine Strahlungsleistung im UV-Wellenlängenbereich in einem Bereich von ungefähr 2 W bis ungefähr 5 W, beispielsweise in einem Bereich von ungefähr 2,5 W bis ungefähr 4 W, beispielsweise in einem Bereich von ungefähr 2,8 W bis ungefähr 3,6 W aufweisen.

Somit kann das Leuchtmittel 952 eine Bestrahlungsstärke im UV-C-Bereich, ermittelt in einem Abstand von ungefähr 1 m, in einem Bereich von ungefähr 0,2 W/m² bis ungefähr 0,4 W/m² , beispielsweise in einem Bereich von ungefähr 0,25 W/m² bis ungefähr 0,37 W/m², beispielsweise in einem Bereich von ungefähr 0,3 W/m² bis ungefähr 0,35 W/m² aufweisen. Als Leuchtmittel 952 kann beispielsweise eine Lampe des Typs "Puritec UV-C" (HNS S/E 11W 2G7) von OSRAM verwendet werden. Jedoch ist das Leuchtmittel 952 nicht hierauf beschränkt, sondern jedes andere Leuchtmittel, das die erforderliche Bestrahlungsstärke im UV-Bereich aufweist, kann ebenfalls verwendet werden.

Die Steuerungseinheit (nicht dargestellt) der Vorrichtung zur Aufzucht von Pflanzen kann dazu eingerichtet sein, die Bewässerungsvorrichtung (nicht dargestellt) derart anzusteuern, dass das in dem Wasserkreislaufsystem der Bewässerungsvorrichtung befindliche Wasser durch den Zwischenraum 948 der Reinigungsröhre 945 hindurch gepumpt wird (siehe Pfeile 949). Dabei kann die Steuerungseinheit dazu eingerichtet sein, die Vorrichtung zum Reinigen des Wassers 941 derart anzusteuern, dass das in der Reinigungsröhre 945 angeordnete Leuchtmittel 952 derart Licht im UV-C-Bereich abstrahlt, dass das in dem Zwischenraum 948 befindliche bzw. durchströmende Wasser gereinigt wird. Beispielsweise kann die Steuerungseinheit dazu eingerichtet sein, die Bewässerungsvorrichtung und die Vorrichtung zum Reinigen des Wassers 941 derart anzusteuern, dass Pilze, Protisten, Bakterien und/oder Algen, die sich in dem Wasser befinden, abgetötet werden.

Dazu kann die Steuerungseinheit dazu eingerichtet sein, das in der Bewässerungsvorrichtung vorhandene Wasser in einer Durchflussrate durch die Reinigungsröhre zu pumpen (siehe Pfeile 949), dass die Beleuchtungsdauer mittels des Leuchtmittels 952 zum Abtöten von Pilzen, Protisten, Bakterien und/oder Algen ausreicht. Anders ausgedrückt kann die Steuerungseinheit dazu eingerichtet sein, die Bewässerungsvorrichtung und die Vorrichtung zum Reinigen des Wassers 941 derart anzusteuern, dass das Wasser des Wasserkreislaufsystems so lange, anders ausgedrückt für eine so lange Zeitdauer, in dem Zwischenraum 948 verbleibt, dass in dem Wasser vorhandene Pilze, Protisten, Bakterien und/oder Algen abgetötet werden. Anders ausgedrückt kann die Steuerungseinheit dazu eingerichtet sein, die Bewässerungsvorrichtung und die Vorrichtung zum Reinigen des Wassers 941 derart anzusteuern, dass die Durchflussrate des Wassers durch den Zwischenraum 948 so eingestellt ist, anders ausgedrückt, dass das Wasser für eine solche Zeitdauer in dem Zwischenraum 948 verbleibt, dass in dem Wasser befindliche Pilze, Protisten, Bakterien und/oder Algen mittels des von dem Leuchtmittel 952 abgestrahlten UV-C-Lichts abgetötet werden. Beispielsweise kann die Steuerungseinheit dazu eingerichtet sein, eine Bestrahlungsdauer des in dem Zwischenraum 948 befindlichen bzw. durchströmenden Wassers mittels des Leuchtmittels 952 festzulegen. Andererseits kann die Steuerungseinheit dazu eingerichtet sein, die Bestrahlungsdauer des in dem Zwischenraum 948 befindlichen bzw. durchströmenden Wassers mittels des Leuchtmittels 952 zu regeln bzw. zu steuern, anders ausgedrückt zu verändern. Dabei kann die Steuerungseinheit einerseits dazu eingerichtet sein, das Wasser des Wasserkreislaufsystems kontinuierlich durch die Reinigungsröhre 945 zu pumpen. Anders ausgedrückt kann die Steuerungseinheit dazu eingerichtet sein, die Bewässerungsvorrichtung derart anzusteuern, dass kontinuierlich Wasser durch den Zwischenraum 948 der Reinigungsröhre 945 hindurch gepumpt wird. Andererseits kann die Steuerungseinheit einerseits dazu eingerichtet sein, das Wasser des Wasserkreislaufsystems in Intervallen durch die Reinigungsröhre 945 zu pumpen. Anders ausgedrückt kann die Steuerungseinheit dazu eingerichtet sein, die Bewässerungsvorrichtung derart anzusteuern, dass Wasser in Intervallen durch den Zwischenraum 948 der Reinigungsröhre 945 hindurch gepumpt wird.

Beispielsweise kann die Steuerungseinheit dazu eingerichtet sein, die Bewässerungsvorrichtung derart anzusteuern, dass das Wasser der Vorrichtung zum Reinigen des Wassers 941 in regelmäßigen Intervallen zugeführt wird. Allerdings kann die Steuerungseinheit auch dazu eingerichtet sein, die Bewässerungsvorrichtung derart anzusteuern, dass das Wasser der Vorrichtung zum Reinigen des Wassers 941 in vorher festgelegten Zyklen zugeführt wird. Beispielsweise kann die Steuerungseinheit dazu eingerichtet sein, die Bewässerungsvorrichtung derart anzusteuern, dass das Wasser des Wasserkreislaufsystems in solchen Zyklen zugeführt wird, dass darin befindliche Pilze, Protisten, Bakterien und/oder Algen abgetötet werden. Eine genauere Beschreibung der Ansteuerung der Bewässerungsvorrichtung und der Vorrichtung zum Reinigen des Wassers 941 mittels der Steuerungseinheit zum Reinigen des Wassers wird unter Bezugnahme auf Fig.10 genauer beschrieben werden.

Es ist zu bemerken, dass die hier beschriebene Vorrichtung zum Reinigen des Wassers 941 in verschiedenen Ausführungsbeispielen in den unter Bezugnahme auf alle oben aufgeführten und beschriebenen Figuren dargestellten Bewässerungsvorrichtungen der Vorrichtung zur Aufzucht von Pflanzen bereitgestellt sein kann. Beispielsweise kann die hier beschriebene Vorrichtung zum Reinigen des Wassers 941 in dem Wasserkreislaufsystem 310 der Fig.3 bereitgestellt sein, auch wenn diese in Fig.3 nicht explizit dargestellt ist. Ebenso kann die Vorrichtung zum Reinigen des Wassers 441, die im Zusammenhang der Beschreibung des Wasserkreislaufsystems 410 unter Bezugnahme auf die Fig.4 beschrieben ist, mittels der hier beschriebenen Vorrichtung zum Reinigen des Wassers 941 bereitgestellt sein. Analoges gilt für die Vorrichtung zum Reinigen des Wassers 741 des in Fig.7 dargestellten Wasserkreislaufsystems 710.

Fig.10 zeigt ein Ablaufdiagramm eines Verfahrens zur Aufzucht von Pflanzen gemäß verschiedenen Ausführungsbeispielen.

Wie in Fig.10 dargestellt, weist ein Verfahren zur Aufzucht von Pflanzen in verschiedenen Ausführungsbeispielen Einbringen einer oder mehrerer Saatmatten in einen Aufnahmeraum einer Vorrichtung zur Aufzucht von Pflanzen, 1010, Steuern einer Bewässerungsvorrichtung mittels einer Programmsteuerung einer Steuerungseinheit, wobei die Bewässerungseinheit ein Wasserkreislaufsystem und Wasser aufweist, 1020, und Reinigen des Wassers in der Bewässerungsvorrichtung, 1030, auf.

In verschiedenen Ausführungsbeispielen kann das Verfahren zur Aufzucht von Pflanzen mittels einer Vorrichtung zur Aufzucht von Pflanzen, wie sie unter Bezugnahme auf Fig.1 dieser Beschreibung beschrieben ist, bereitgestellt werden. Ebenso kann das Verfahren zur Aufzucht von Pflanzen mittels einer Vorrichtung zur Aufzucht von Pflanzen, wie sie unter Bezugnahme auf andere Figuren dieser Beschreibung beschrieben ist, bereitgestellt werden. Beispielsweise kann das Verfahren zur Aufzucht von Pflanzen mittels der Vorrichtung zur Aufzucht von Pflanzen, die eine Bewässerungsvorrichtung aufweist, wie sie unter Bezugnahme auf Fig.3, Fig.4, Fig.6 und/oder Fig.7 beschrieben ist, bereitgestellt werden. Beispielsweise kann das Reinigen des Wassers mittels einer Vorrichtung zum Reinigen des Wassers, die in die Bewässerungsvorrichtung integriert ist, bereitgestellt werden. Beispielsweise kann das Reinigen des Wassers mittels der unter Bezugnahme auf Fig.9 beschriebenen Vorrichtung zum Reinigen des Wassers 941 realisiert werden. Ebenso kann das Reinigen des Wassers mittels der unter Bezugnahme auf Fig.4 beschriebenen Vorrichtung zum Reinigen des Wassers 441 des Wasserkreislaufsystems 410 bereitgestellt werden, und das Reinigen des Wassers kann mittels der unter Bezugnahme auf Fig.7 beschriebenen Vorrichtung zum Reinigen des Wassers 741 des Wasserkreislaufsystems 710 bereitgestellt werden.

In verschiedenen Ausführungsbeispielen kann das Wasser in der Bewässerungsvorrichtung mittels Bestrahlens des Wassers mittels der Vorrichtung zum Reinigen des Wassers 941 gereinigt werden. Beispielsweise kann das Bestrahlen des Wassers mit Licht im UV-C-Bereich mittels des Leuchtmittels 952, das Licht im UV-C-Bereich abstrahlen kann, bereitgestellt werden. Anders ausgedrückt kann das Leuchtmittel 952 Licht im UV-Wellenlängenbereich des Spektrums abstrahlen. Insbesondere kann das Leuchtmittel 952 Licht im UV-C-Wellenlängenbereich des Spektrums abstrahlen. Beispielsweise kann das Leuchtmittel 952 Licht in einem Wellenlängenbereich von ungefähr 200 nm bis ungefähr 280 nm, beispielsweise in einem Bereich von ungefähr 230 nm bis ungefähr 260 nm, beispielsweise in einem Bereich von ungefähr 250 nm bis ungefähr 255 nm abstrahlen.

Das Leuchtmittel 952 kann dabei mit einer Leistung in einem Bereich von ungefähr 5 W bis ungefähr 20 W, beispielsweise in einem Bereich von ungefähr 7 W bis ungefähr 15 W, beispielsweise in einem Bereich von ungefähr 10 W bis ungefähr 11 W Licht abstrahlen. Dabei kann eine Strahlungsleistung im UV-Wellenlängenbereich des Leuchtmittels 952 in einem Bereich von ungefähr 2 W bis ungefähr 5 W, beispielsweise in einem Bereich von ungefähr 2,5 W bis ungefähr 4 W, beispielsweise in einem Bereich von ungefähr 2,8 W bis ungefähr 3,6 W liegen.

Somit kann eine Bestrahlungsstärke im UV-C-Bereich des Leuchtmittels 952, ermittelt in einem Abstand von ungefähr 1 m, in einem Bereich von ungefähr 0,2 W/m² bis ungefähr 0,4 W/m² , beispielsweise in einem Bereich von ungefähr 0,25 W/m² bis ungefähr 0,37 W/m², beispielsweise in einem Bereich von ungefähr 0,3 W/m² bis ungefähr 0,35 W/m² liegen. Als Leuchtmittel 952 kann beispielsweise eine Lampe des Typs "Puritec UV-C" (HNS S/E 11W 2G7) von OSRAM verwendet werden. Jedoch ist das Leuchtmittel 952 nicht hierauf beschränkt, sondern jedes andere Leuchtmittel, das die erforderliche Bestrahlungsstärke im UV-Bereich aufweist, kann ebenfalls verwendet werden.

Demzufolge kann mittels des Leuchtmittels 952 in der oben beschriebenen Anordnung eine Bestrahlungsstärke im UV-Wellenlängenbereich in einem Bereich von ungefähr 145 W/m² bis ungefähr 155 W/m², beispielsweise in einem Bereich von ungefähr 150 W/cm² bis ungefähr 152 W/m², beispielsweise in einem Bereich von ungefähr 151,5 W/m² bis ungefähr 151,8 W/m² erzielt werden, mit der das in dem Spalt 953 zwischen der äußeren Röhre 946 und der inneren Röhre 947 vorhandene Wasser bestrahlt wird.

Unter Bezugnahme auf Fig.9A und Fig.9B kann die Steuerungseinheit der Vorrichtung zur Aufzucht von Pflanzen die Bewässerungsvorrichtung derart ansteuern, dass das in dem Wasserkreislaufsystem der Bewässerungsvorrichtung befindliche Wasser durch einen Zwischenraum 948 der Reinigungsröhre 945 hindurch gepumpt wird (siehe Pfeile 949). Dabei kann die Steuerungseinheit die Vorrichtung zum Reinigen des Wassers 941 derart ansteuern, dass das in der Reinigungsröhre 945 angeordnete Leuchtmittel 952 derart Licht im UV-C-Bereich abstrahlt, dass das in dem Zwischenraum 948 befindliche Wasser gereinigt wird. Beispielsweise kann die Steuerungseinheit die Bewässerungsvorrichtung und die Vorrichtung zum Reinigen des Wassers 941 derart ansteuern, dass Pilze, Protisten, Bakterien und/oder Algen, die sich in dem Wasser befinden, abgetötet werden.

Dazu kann die Steuerungseinheit das in der Bewässerungsvorrichtung vorhandene Wasser in einer Durchflussrate durch die Reinigungsröhre pumpen (siehe Pfeile 949), dass die Beleuchtungsdauer mittels des Leuchtmittels 952 zum Abtöten von Pilzen, Protisten, Bakterien und/oder Algen ausreicht. Anders ausgedrückt kann die Steuerungseinheit die Bewässerungsvorrichtung und die Vorrichtung zum Reinigen des Wassers 941 derart ansteuern, dass das Wasser des Wasserkreislaufsystems so lange, anders ausgedrückt für eine so lange Zeitdauer, in dem Zwischenraum 948 verbleibt, dass in dem Wasser vorhandene Pilze, Protisten, Bakterien und/oder Algen abgetötet werden. Anders ausgedrückt kann die Steuerungseinheit die Bewässerungsvorrichtung und die Vorrichtung zum Reinigen des Wassers 941 derart ansteuern, dass die Durchflussrate des Wassers durch den Zwischenraum 948 so eingestellt ist, anders ausgedrückt, dass das Wasser für eine solche Zeitdauer in dem Zwischenraum 948 verbleibt, dass in dem Wasser befindliche Pilze, Protisten, Bakterien und/oder Algen mittels des von dem Leuchtmittel 952 abgestrahlten UV-C-Lichts abgetötet werden. Beispielsweise kann die Steuerungseinheit eine Bestrahlungsdauer des in dem Zwischenraum 948 befindlichen Wassers mittels des Leuchtmittels 952 festlegen. Andererseits kann die Steuerungseinheit die Bestrahlungsdauer des in dem Zwischenraum 948 befindlichen Wassers mittels des Leuchtmittels 952 regeln bzw. steuern, anders ausgedrückt verändern.

Beispielsweise wird zum Abtöten von vorhandenen Keimen eine Bestrahlung mit UV-C-Licht in einem Bereich von ungefähr 2000 Ws/m² bis ungefähr 5000 Ws/m², beispielsweise in einem Bereich von ungefähr 2500 Ws/m² bis ungefähr 4000 Ws/m², beispielsweise in einem Bereich von ungefähr 3000 Ws/m² bis ungefähr 3500 Ws/m² benötigt. Daraus ergibt sich aus der mittels des oben beschriebenen Leuchtmittels 952 mit der entsprechenden Bestrahlungsstärke im UV-Wellenlängenbereich erzielten Bestrahlung eine erforderliche Expositionszeit des Wassers in der Reinigungsröhre 945 zum Abtöten der vorhandenen Zellen in einem Bereich von ungefähr 10 s bis ungefähr 30 s, beispielsweise in einem Bereich von ungefähr 15 s bis ungefähr 25 s, beispielsweise in einem Bereich von ungefähr 19 s bis ungefähr 21 s.

Dabei kann die Steuerungseinheit einerseits das Wasser des Wasserkreislaufsystems kontinuierlich durch die Reinigungsröhre 945 pumpen. Anders ausgedrückt kann die Steuerungseinheit die Bewässerungsvorrichtung derart ansteuern, dass kontinuierlich Wasser durch den Zwischenraum 948 der Reinigungsröhre 945 hindurch gepumpt wird. Andererseits kann die Steuerungseinheit das Wasser des Wasserkreislaufsystems in Intervallen durch die Reinigungsröhre 945 pumpen. Anders ausgedrückt kann die Steuerungseinheit die Bewässerungsvorrichtung derart ansteuern, dass Wasser in Zyklen durch den Zwischenraum 948 der Reinigungsröhre 945 hindurch gepumpt wird.

Beispielsweise kann die Steuerungseinheit die Bewässerungsvorrichtung derart ansteuern, dass das Wasser der Vorrichtung zum Reinigen des Wassers 941 in regelmäßigen Intervallen zugeführt wird. Allerdings kann die Steuerungseinheit auch die Bewässerungsvorrichtung derart ansteuern, dass das Wasser der Vorrichtung zum Reinigen des Wassers 941 in vorher festgelegten Zyklen zugeführt wird. Beispielsweise kann die Steuerungseinheit die Bewässerungsvorrichtung derart ansteuern, dass das Wasser des Wasserkreislaufsystems der Vorrichtung zum Reinigen des Wassers in solchen Zyklen zugeführt wird, dass darin befindliche Pilze, Protisten, Bakterien und/oder Algen abgetötet werden.

In dem Verfahren zur Aufzucht von Pflanzen kann in verschiedenen Ausführungsbeispielen das Wasser aus dem Wasserkreislaufsystem der Vorrichtung zum Reinigen des Wassers 941 für eine Zeitdauer zugeführt werden, bei der sichergestellt ist, dass in dem Wasser befindliche Pilze, Protisten, Bakterien und/oder Algen abgetötet werden. Anders ausgedrückt kann das Wasser aus dem Wasserkreislaufsystem der Vorrichtung zum Reinigen des Wassers 941 für eine Zeitdauer zugeführt werden, bei der sichergestellt ist, dass das gesamte in dem Wasserkreislaufsystem vorhandene Wasser mittels des Leuchtmittels 952 bestrahlt wird.

Dabei kann die Durchflussgeschwindigkeit durch den Zwischenraum 948 der Vorrichtung zum Reinigen des Wassers 941 in dem Wasserkreislaufsystem (siehe 310 in Fig.3) mittels der Wasserkreislauf-Pumpe (siehe 314 in Fig.3) mit einer vorgegebenen Pumpleistung, die in einem Bereich von beispielsweise ungefähr 4 l/min bis ungefähr 10 l/min verändert werden kann, beispielsweise so eingestellt werden, dass bei der oben genannten, zur Sterilisierung der in der Reinigungsröhre befindlichen Wassermenge von ungefähr 0,14 l bis ungefähr 0,15 l erforderlichen Expositionszeit in einem Bereich von ungefähr 19 s bis ungefähr 21 s und einer in der Bewässerungsvorrichtung vorhandenen Wassermenge in einem Bereich von ungefähr 17 l bis ungefähr 20 l das in der Bewässerungsvorrichtung vorhandene Wasser innerhalb von einer erforderlichen Gesamt-Durchflussdauer von ungefähr 35 min (bzw. ungefähr 0,6 h) bis ungefähr 45 min (bzw. ungefähr 0,75 h) sterilisiert wird. Das bedeutet, dass in dieser erforderlichen Gesamt-Durchflussdauer die gesamte Wassermenge in der Bewässerungsvorrichtung zur Sterilisierung des Wassers beispielsweise ungefähr 8-mal bis ungefähr 10-mal vollständig umgepumpt werden kann. Dies entspricht ungefähr 8 sogenannten Durchflusszyklen bis ungefähr 10 Durchflusszyklen, wobei ein Durchflusszyklus die Zeit ist, die erforderlich ist, um alles in dem Wasserkreislaufsystem befindliche Wasser einmal durch die Reinigungsröhre hindurch zu pumpen. Die Anzahl von Durchflusszyklen und die entsprechende Gesamt-Durchflussdauer ist jedoch nicht auf diese Werte beschränkt, sondern kann entsprechend verschiedener Parameter der Vorrichtung, wie beispielsweise der Bestrahlungsstärke des verwendeten Leuchtmittels, der Anordnung des Leuchtmittels in der Reinigungsröhre und der durchschnittlichen Weite des Zwischenraums zwischen den Röhren, und anderer Parameter der Architektur der Vorrichtung zum Reinigen des Wassers angepasst werden, um eine gründliche Sterilisierung des Wassers zu erzielen.

Beispielsweise kann das Wasser für eine Zeitdauer in einem Bereich von ungefähr 0,25 h bis ungefähr 1,5 h, beispielsweise in einem Bereich von ungefähr 0,5 h bis ungefähr 1 h, beispielsweise in einem Bereich von ungefähr 0,6 h bis ungefähr 0,75 h der Bestrahlung mit UV-C-Licht mittels des Leuchtmittels 952 ausgesetzt werden. Anders ausgedrückt kann das Wasser für eine Zeitdauer in einem Bereich von ungefähr 0,25 h bis ungefähr 1,5 h, beispielsweise in einem Bereich von ungefähr 0,5 h bis ungefähr 1 h, beispielsweise in einem Bereich von ungefähr 0,6 h bis ungefähr 0,75 h mittels des Leuchtmittels 952 mit Licht im UV-C-Bereich bestrahlt werden. Zum Schutze des Nutzers kann die Bestrahlung des Wassers zum Abtöten von Pilzen, Protisten, Bakterien und/oder Algen vorzugsweise nachts durchgeführt werden.

Dabei kann die zum Abtöten der in dem Wasser des Wasserkreislaufsystems befindlichen Pilze, Protisten, Bakterien und/oder Algen notwendige Zeitdauer in Zyklen unterbrochen werden. Beispielsweise kann die zum Abtöten der in dem Wasser des Wasserkreislaufsystems befindlichen Pilze, Protisten, Bakterien und/oder Algen notwendige Zeitdauer in ungefähr 5 Zyklen bis ungefähr 20 Zyklen, beispielsweise in ungefähr 8 Zyklen bis ungefähr 15 Zyklen, beispielsweise in ungefähr 9 Zyklen bis ungefähr 10 Zyklen unterbrochen werden. Dabei kann ein Zyklus einem oben genannten Durchflusszyklus entsprechen, wobei in einem Durchflusszyklus beispielsweise einmal die in dem Wasserkreislaufsystem vorhandene Wassermenge vollständig umgepumpt werden kann. Alternativ können auch andere Zyklen bzw. andere Durchflusszyklen definiert werden, um eine gründliche Sterilisierung des Wassers zu gewährleisten. Es ist zu bemerken, dass es notwendig sein kann, abhängig von der Anordnung des Leuchtmittels 952 in der Reinigungsröhre 945, von der Pumpgeschwindigkeit des Wassers in dem Einzelkreislauf zum Reinigen des Wassers und damit von der Verbleibdauer des Wassers in dem Zwischenraum 948, der Bestrahlungsintensität, der Anzahl von Pilzen, Protisten, Bakterien und/oder Algen in dem Wasser und anderer Parameter die zum Abtöten der Pilze, Protisten, Bakterien und/oder Algen notwendige Zeitdauer und/oder die Anzahl der Zyklen mittels der Steuerungseinheit anzupassen.

Wie vorangehend beschrieben, können mittels des Bestrahlens des Wassers mit Licht im UV-C-Bereich in dem Verfahren zur Aufzucht von Pflanzen in dem Wasser wachsende Pilze, Protisten, Bakterien und/oder Algen abgetötet werden. Anders ausgedrückt kann das Wasser in der Bewässerungsvorrichtung mittels des Bestrahlens des Wassers mit Licht im UV-C-Bereich sterilisiert werden.

In dem Verfahren kann in verschiedenen Ausführungsbeispielen mittels der Steuerungseinheit das Wasser zum Reinigen in einen Einzelkreislauf des Wasserkreislaufsystems geleitet werden. Dieser Einzelkreislauf kann dem unter Bezugnahme auf Fig.4 beschriebenen Einzelkreislauf 440 entsprechen und kann dem unter Bezugnahme auf Fig.7 beschriebenen Einzelkreislauf 740 entsprechen.

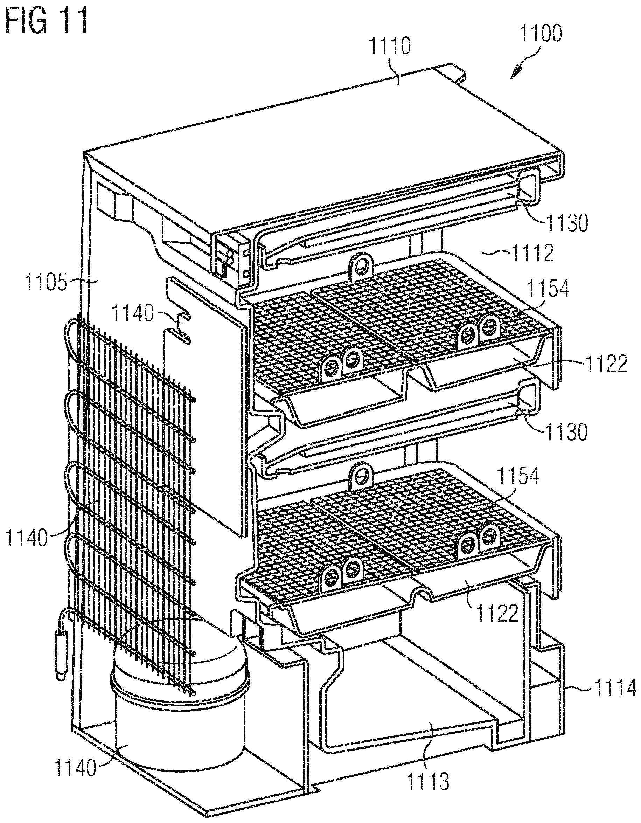

Fig.11 zeigt eine Querschnittansicht der Vorrichtung zur Aufzucht von Pflanzen gemäß verschiedenen Ausführungsbeispielen aus einer seitlichen Perspektive.

Wie in Fig.11 dargestellt, weist die Vorrichtung zur Aufzucht von Pflanzen 1100 in verschiedenen Ausführungsbeispielen ein schrankartiges Gehäuse 1110 auf, das hier aus einer seitlichen Perspektive schräg von hinten in Querschnittansicht dargestellt ist. Eine Tür des Gehäuses 1110 ist der Einfachheit halber in dieser Darstellung weggelassen.

Das Gehäuse 1110 weist einen Aufnahmeraum 1112 auf, in den beispielsweise, wie hier dargestellt, zwei Bewässerungswannen 1122 aufgenommen sein können. Auf den Bewässerungswannen 1122 können Mattenträger 1154 angeordnet sein, auf die entsprechende Saatmatten (nicht dargestellt) aufgelegt werden können, wobei die Saatmatten Saatgut (nicht dargestellt) aufweisen können, aus dem Pflanzen (nicht dargestellt) auswachsen können.

Über jeder der Bewässerungswannen 1122 kann jeweils eine Beleuchtungseinrichtung 1130 angeordnet sein. In einem Sockel 1114 des Gehäuses 1110 kann ein Wassertank 1113 einer Bewässerungsvorrichtung (nicht dargestellt) bereitgestellt sein. Außerdem kann eine Steuerungseinheit (nicht dargestellt) in dem Sockel 1114 angeordnet sein.

Die Vorrichtung 1100 kann ferner eine Klimatisierungseinrichtung 1140 aufweisen, deren Elemente, wie in Fig.11 dargestellt, zumindest teilweise an einer Rückseitenwand 1105 des Gehäuses 1110 angeordnet sein können.

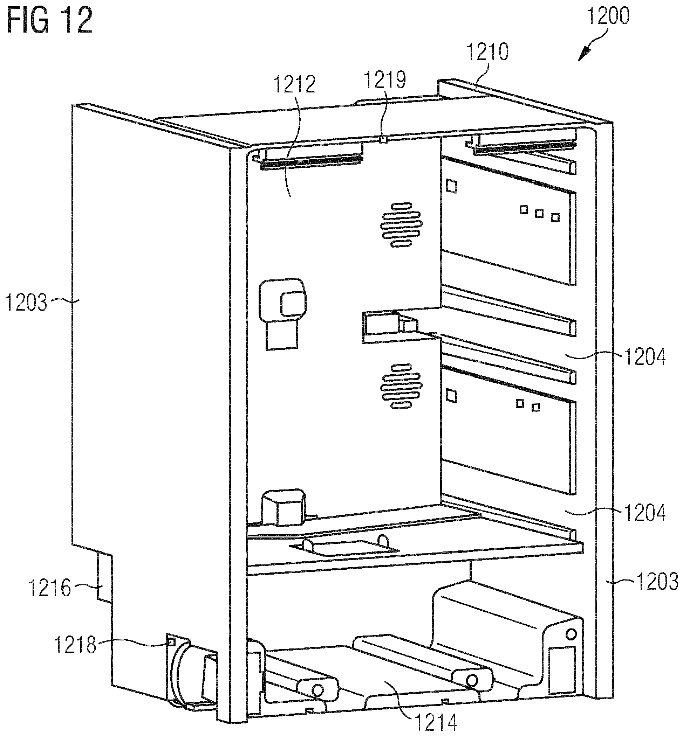

Fig.12 zeigt eine Querschnittansicht der Vorrichtung zur Aufzucht von Pflanzen gemäß verschiedenen Ausführungsbeispielen aus einer frontalen Perspektive.

Wie in Fig.12 dargestellt, weist die Vorrichtung zur Aufzucht von Pflanzen 1200 in verschiedenen Ausführungsbeispielen ein schrankartiges Gehäuse 1210 auf, das hier aus einer frontalen Perspektive schräg von der Seite in Querschnittansicht dargestellt ist. Eine Tür des Gehäuses 1210 ist der Einfachheit halber in dieser Darstellung weggelassen.

Das Gehäuse 1210 weist einen Aufnahmeraum 1212 auf, der dazu eingerichtet sein kann, mindestens eine schubladenartige Aufzuchteinheit (nicht dargestellt) aufzunehmen. Wie aus Fig.12 ersichtlich, können Seitenwände 1203 des Gehäuses 1210 zum Aufnehmen der Aufzuchteinheiten (nicht dargestellt) Führungsleisten 1204 aufweisen.

Ferner weist das Gehäuse 1210 einen Sockel 1214 auf, in den beispielsweise ein Wassertank (nicht dargestellt) aufgenommen sein kann. An einer rückseitigen Wand des Sockels 1214 kann ein Sensor 1216 zum Ermitteln eines Leitwerts des Wassers und zum Ermitteln des Wasserstands in dem Wassertank (nicht dargestellt) bereitgestellt sein.

An einer Seitenwand 1203 des Gehäuses 1210 kann des Weiteren ein weiterer Sensor 1218 zum Ermitteln einer Umgebungstemperatur bereitgestellt sein.

Das Gehäuse 1210 kann ferner einen Tür-Sensor 1219 aufweisen, wobei der Tür-Sensor 1219 dazu eingerichtet ist zu ermitteln, ob eine Tür (nicht dargestellt) der Vorrichtung zur Aufzucht von Pflanzen 1200 geöffnet oder geschlossen ist. Der Tür-Sensor 1219 kann beispielsweise einen IR-Sensor 1219 aufweisen. Signale des Tür-Sensors 1219 können in verschiedenen Ausführungsbeispielen der Steuerungseinheit (nicht dargestellt) zugeführt werden. Die Steuerungseinheit kann dazu eingerichtet sein, die Bewässerungsvorrichtung bei geöffneter Tür derart anzusteuern, dass kein Wasser in dem Wasserkreislaufsystem umgepumpt wird, und bei geschlossener Tür derart anzusteuern, dass Wasser aus dem Wassertank (nicht dargestellt) in dem Wasserkreislaufsystem umgepumpt wird.

Entsprechend kann in dem Verfahren zur Aufzucht von Pflanzen ferner mittels des Tür-Sensors 1219 ermittelt werden, ob eine Tür (nicht dargestellt) der Vorrichtung 1200 geöffnet oder geschlossen ist. Der Tür-Sensor 1219 kann optional ein IR-Sensor 1219 sein. Die Steuerungseinheit (nicht dargestellt) kann in dem Verfahren zur Aufzucht von Pflanzen Signale von dem Tür-Sensor 1219 empfangen. Die Steuerungseinheit kann dann bei geöffneter Tür die Bewässerungsvorrichtung derart ansteuern, dass kein Wasser in dem Wasserkreislaufsystem umgepumpt wird, und kann bei geschlossener Tür die Bewässerungsvorrichtung derart ansteuern, dass Wasser aus dem Wassertank in dem Wasserkreislaufsystem umgepumpt wird.

Beispielsweise kann die Steuerungseinheit das Wasserkreislaufsystem derart ansteuern, dass bei geöffneter Tür den Bewässerungswannen kein Wasser aus dem Wassertank zugeführt wird und bei geschlossener Tür den Bewässerungswannen Wasser aus dem Wassertank zugeführt wird. Ebenso kann die Steuerungseinheit das Wasserkreislaufsystem derart ansteuern, dass bei geöffneter Tür der Vorrichtung zum Reinigen des Wassers kein Wasser aus dem Wassertank zugeführt wird und bei geschlossener Tür der Vorrichtung zum Reinigen des Wassers Wasser aus dem Wassertank zugeführt wird. Dadurch kann vermieden werden, dass Wasser bei geöffneter Tür beim Befüllen der Bewässerungswannen unkontrolliert aus den Bewässerungswannen überläuft oder abläuft, wodurch ein Verbraucher davor geschützt ist, beispielsweise beim Hantieren mit den über den Bewässerungswannen angeordneten Saatmatten oder Pflanzen nass zu werden.

In Summe können die hier bereitgestellten Ausführungsformen der Vorrichtung zur Aufzucht von Pflanzen gewährleisten, eine Umgebung bereitzustellen, in der in einem Maßstab, der auch in moderne Küchen realisierbar ist, aus Saatgut Pflanzen, wie beispielsweise Kräuter, Gemüse, Obst und Salat, gezogen werden können. Dadurch wird mittels der vorliegenden Vorrichtung dem durchschnittlichen Verbraucher eine Möglichkeit an die Hand gegeben, seinem Speiseplan entsprechend seiner persönlichen Vorlieben frische Zutaten zufügen zu können und dabei einerseits eine gewünschte Qualität sicherzustellen und andererseits den dafür notwendigen Aufwand auf das im modernen Berufsleben mögliche Maß zu beschränken.

Insbesondere wird mittels der bereitgestellten Ausführungsformen der Bewässerungsvorrichtung der vorliegenden Vorrichtung sichergestellt, dass das beim Keimen und Wachsen der Pflanzen verwendete Gießwasser eine Zusammensetzung aufweist, die den in der Vorrichtung angebauten Pflanzensorten und ihrem Zustand, beispielsweise ihrem Wachstumsfortschritt, besonders zuträglich ist.

Die besondere Ausgestaltung des in verschiedenen Ausführungsbeispielen bereitgestellten Wasserkreislaufsystems der vorliegenden Vorrichtung stellt dabei sicher, dass den Pflanzen nicht nur das zum Wachstum notwendige Wasser zugeführt wird, sondern insbesondere seine Qualität und Zusammensetzung sowie sein Nährstoffgehalt mittels entsprechender Sensoren kontrolliert und geregelt werden.

Dabei gehen in die Regelung mittels der dafür vorgesehenen Steuereinheit in verschiedenen Ausführungsbeispielen neben den Messwerten der verschiedenen Sensoren insbesondere Informationen über die eingebrachte Pflanzensorte als auch über den Zustand der daraus wachsenden Pflanzen ein.

Beispielsweise kann als Maß für eine Zusammensetzung des Wassers in der Bewässerungsvorrichtung gemäß verschiedener Ausführungsbeispiele der Leitwert des Wassers herangezogen werden, der von dem Gehalt des Wassers beispielsweise an Salzen, Säuren und Basen, aber auch von Schadstoffen wie Nitrat, abhängig ist. In der vorliegenden Vorrichtung wird demgemäß in verschiedenen Ausführungsbeispielen ein Sensor zum Ermitteln des Leitwerts bereitgestellt, der außerdem einen Füllstand des Wassers in der Bewässerungsvorrichtung ermitteln kann.

Gegenüber der herkömmlichen Weise, den Leitwert von Wasser mittels elektrischer Widerstandsmessung (Konduktometrie) zu ermitteln, wie beispielsweise in Umkehr-Osmoseanlagen, in der Aquaristik, in Schwimmbädern und bei der Trinkwasseranalyse üblich, weist der vorliegend in verschiedenen Ausführungsbeispielen bereitgestellte Sensor den Vorteil auf, den Leitwert kapazitiv zu ermitteln. Mittels des vorliegend bereitgestellten Sensors ist es folglich möglich, den Leitwert und des Füllstand des Wassers mittels eines kombinierten Sensors kontaktlos zu ermitteln, wodurch die Lebensdauer der verwendeten Elektroden gesteigert werden kann.

Außerdem wird mit der in verschiedenen Ausführungsbeispielen bereitgestellten Bewässerungsvorrichtung mittels der zusätzlich vorgesehenen Vorrichtung zum Reinigen des Wassers eine weitere Möglichkeit bereitgestellt, die Qualität des Wassers möglichst konstant zu halten. Dafür wird mittels der Vorrichtung zum Reinigen des Wassers dieses sterilisiert und dadurch sichergestellt, dass sich in dem Wasserkreislaufsystem die Wasserqualität nicht aufgrund des Wachstums von Protisten, Bakterien, Pilzen und/oder Algen in einer für die Pflanzen ungünstigen Weise verändert.

## Patentansprüche

1. Vorrichtung zur Aufzucht von Pflanzen, aufweisend:
• eine Bewässerungsvorrichtung (20);
• einen Aufnahmeraum (12) zum Aufnehmen einer oder mehrerer Saatmatten; und
• eine Steuerungseinheit (60), die eingerichtet ist, mittels einer Programmsteuerung die Bewässerungsvorrichtung (20) zu steuern,
• wobei die Bewässerungsvorrichtung (20) ein Wasserkreislaufsystem (410) zum Zuführen von Wasser zu den Saatmatten aufweist, wobei das Wasserkreislaufsystem (410) mindestens einen Zulauf (422), einen Wassertank, mindestens eine Wasserkreislaufpumpe (414) und mindestens einen Ablauf (424) aufweist, und
• wobei die Bewässerungsvorrichtung (20) einen Sensor (416) aufweist, der eingerichtet ist, einen Leitwert des zugeführten Wassers zu ermitteln.

2. Vorrichtung nach Anspruch 1, wobei der Sensor (416) ferner dazu eingerichtet ist, einen Wasserstand in dem Wassertank der Bewässerungsvorrichtung zu ermitteln.

3. Vorrichtung nach Anspruch 1 oder 2, wobei der Sensor (416) dazu eingerichtet ist, den Leitwert und den Wasserstand des Wassers kontaktlos zu ermitteln,
wobei optional der Sensor (416) ein kapazitiver Sensor ist.

4. Vorrichtung nach einem der Ansprüche 1 bis 3, wobei die Steuerungseinheit (60) eingerichtet ist, Messwerte von dem Sensor (416) zu empfangen.

5. Vorrichtung nach einem der Ansprüche 1 bis 4, wobei die Bewässerungsvorrichtung (20) eine oder mehrere Bewässerungswannen (421, 431), die jeweils unter den Saatmatten angeordnet sind, aufweist und dazu eingerichtet ist, der einen oder mehreren Bewässerungswannen (421, 431) Wasser aus dem Wassertank zuzuführen.

6. Vorrichtung nach einem der Ansprüche 1 bis 5, wobei die Bewässerungsvorrichtung (20) ferner aufweist:
mindestens einen Vorratsbehälter (661, 662) zum Bevorraten von mineralischem Dünger und/oder organischem Dünger und/oder Säure und/oder Base; und
mindestens eine Pumpe (651, 652) zum Zuführen des mineralischen Düngers und/oder des organischen Düngers und/oder der Säure und/oder der Base in das Wasserkreislaufsystem,
wobei die Pumpe (651, 652) optional eine peristaltische Pumpe ist.

7. Vorrichtung nach einem der Ansprüche 1 bis 6, wobei die Steuerungseinheit (60) dazu eingerichtet ist, einen Nährstoffgehalt des Wassers auf der Basis des Leitwertes des Wassers zu regeln,
wobei optional die Steuerungseinheit (60) dazu eingerichtet ist, eine Regelgröße für den Nährstoffgehalt auf der Basis der in den Aufnahmeraum (12) eingebrachten Pflanzen und/oder ihres Zustands festzulegen.

8. Vorrichtung nach einem der Ansprüche 1 bis 7, wobei die Bewässerungsvorrichtung (20) ferner eine Vorrichtung zum Reinigen des Wassers (441) aufweist,
wobei optional die Vorrichtung zum Reinigen des Wassers (441) eingerichtet ist, das Wasser mittels Bestrahlens mit Licht im UV-C-Bereich zu reinigen.

9. Verfahren zur Aufzucht von Pflanzen, aufweisend:
• Einbringen einer oder mehrere Saatmatten in einen Aufnahmeraum (12) einer Vorrichtung zur Aufzucht von Pflanzen (100);
• Ansteuern einer Bewässerungsvorrichtung (20) mittels einer Programmsteuerung einer Steuerungseinheit (60), wobei die Bewässerungseinheit (20) ein Wasserkreislaufsystem aufweist;
• Zuführen von Wasser zu den Saatmatten mittels des Wasserkreislaufsystems (410), das mindestens einen Zulauf (422), einen Wassertank, mindestens eine Wasserkreislaufpumpe (415) und mindestens einen Ablauf (424) aufweist, und
• Ermitteln eines Leitwerts des zugeführten Wassers mittels eines Sensors (416).

10. Verfahren nach Anspruch 9, ferner aufweisend Ermitteln eines Wasserstands in dem Wassertank der Bewässerungsvorrichtung (20),
wobei optional der Leitwert des Wassers und der Wasserstand in dem Wassertank mittels desselben Sensors (416) ermittelt werden.

11. Verfahren nach Anspruch 10, wobei der Leitwert des Wassers und der Wasserstand in dem Wassertank kontaktlos ermittelt werden,
wobei optional der Leitwert des Wassers und der Wasserstand in dem Wassertank kapazitiv ermittelt werden.

12. Verfahren nach einem der Ansprüche 9 bis 11, ferner aufweisend Zuführen von Messwerten des Sensors (416) zu der Steuerungseinheit (60).

13. Verfahren nach einem der Ansprüche 9 bis 12, ferner aufweisend Zuführen von mineralischem Dünger und/oder organischem Dünger und/oder Säure und/oder Base zu dem Wasser in dem Wasserkreislaufsystem mittels mindestens einer Pumpe (651, 652),
wobei die Pumpe (651, 652) optional eine peristaltische Pumpe ist.

14. Verfahren nach einem der Ansprüche 9 bis 13, ferner aufweisend Reinigen des Wassers mittels einer Vorrichtung zum Reinigen des Wassers (441) in der Bewässerungsvorrichtung (20),
wobei optional die Vorrichtung zum Reinigen des Wassers (441) das Wasser mittels Bestrahlens mit Licht im UV-C-Bereich reinigt.
